# EUROPÄISCHE PATENTSCHRIFT

(11) **EP 3 077 763 B1**
(45) Veröffentlichungstag und Bekanntmachung des Hinweises auf die Patenterteilung: **03.01.2018**
(21) Anmeldenummer: 14703556.2
(22) Anmeldetag: 23.01.2014
(51) Int. Cl.: G01B 21/04, G01B 11/24, G01B 11/245

(54) **VERFAHREN ZUR AUSWERTUNG VON KOORDINATENMESSDATEN, ENTSPRECHENDE VORRICHTUNG ZUM VERMESSEN EINES MESSOBJEKTES UND ENTSPRECHENDES COMPUTERPROGRAMMPRODUKT**
METHOD FOR EVALUATING COORDINATE MEASUREMENT DATA, CORRESPONDING DEVICE FOR OBJECT MEASUREMENT AND CORRESPONDING COMPUTER PROGRAM PRODUCT
PROCÉDÉ D'ÉVALUATION DE DONNÉES DE MESURE DE COORDONNÉES, DISPOSITIF CORRESPONDANT DE MESURE D'UN OBJET ET PRODUIT DE PROGRAMME D'ORDINATEUR CORRESPONDANT

(43) Veröffentlichungstag der Anmeldung: 12.10.2016
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Witte, Weller & Partner Patentanwälte mbB
(86) Internationale Anmeldenummer: PCT/EP2014/051350
(87) Internationale Veröffentlichungsnummer: WO 2015/110163

(56) Entgegenhaltungen:
- DE-A1-102010 029 144
- US-A- 5 955 661
- US-A1- 2004 234 025

## Beschreibung

Die vorliegende Erfindung betrifft ein Verfahren zur Auswertung von Koordinatenmessdaten eines Messobjekts, mit den Schritten des Bereitstellens eines durch einen ersten Sensor erfassten ersten Koordinatenmessdatensatzes, wobei der erste Koordinatenmessdatensatz erste Raumkoordinaten mehrerer Auswertungsmesspunkte eines Auswertungsbereichs repräsentiert, wobei der Auswertungsbereich zumindest ein Teilbereich einer Oberfläche oder eines Volumens des Messobjekts ist; und des Bereitstellens eines durch einen zweiten Sensor erfassten zweiten Koordinatenmessdatensatzes, wobei der zweite Koordinatenmessdatensatz zweite Raumkoordinaten von zumindest einem Stützmesspunkt innerhalb des Auswertungsbereichs repräsentiert, wobei jeder Stützmesspunkt einem bestimmten Auswertungsmesspunkt zuordenbar ist und die Auswertungsmesspunkte zumindest einen bestimmten Auswertungsmesspunkt aufweisen.

Ein derartiges Verfahren ist beispielsweise aus der Druckschrift WO 2005/100908 A1 bekannt.

Des Weiteren betrifft die vorliegende Erfindung eine Vorrichtung, insbesondere ein Koordinatenmessgerät oder eine Werkzeugmaschine, zum Vermessen eines Messobjekts sowie ein Verfahren zum Ermitteln von Koordinatenmessdaten eines Messobjekts. Des Weiteren wird ein Computerprogrammprodukt zum Durchführen der Verfahren vorgeschlagen.

Koordinatenmessgeräte beispielsweise zur Erfassung einer dreidimensionalen Oberfläche eines zu prüfenden Werkstücks sind in der industriellen Messtechnik weit verbreitet. Ein Koordinatenmessgerät ist mit einem Sensor ausgestattet, der beispielsweise optisch oder taktil die Lage, Position und Ausrichtung einer Werkstückoberfläche im dreidimensionalen Raum erfassen kann. Der Sensor ist mittels einer entsprechend ausgebildeten Verschiebeeinrichtung oder Kinematik dreidimensional in den drei Raumrichtungen x, y und z bewegbar, wobei mittels einer Steuerung die Position beispielsweise einer taktilen Tastspitze im Raum bei Berührung der Werkstückoberfläche erfassbar ist. In gleicher Weise kann auch ein Sensor im Wesentlichen raumfest angeordnet sein und das zu vermessende Messobjekt wird auf einem Messtisch beispielsweise in einer horizontalen Ebene verfahren und/oder gedreht.

Insbesondere ein taktiler Sensor verfügt über eine nur geringe Messgeschwindigkeit, da er von einem Messpunkt, an dem er eine Werkstückoberfläche berührt, zu einem nächsten Messpunkt verfahren werden muss. Zwar sind auch sogenannte "Scanning-Verfahren" bekannt, in denen der taktile Sensor in Kontakt mit dem Werkstück bewegt wird, auch hier ist die Vorschubgeschwindigkeit jedoch begrenzt. Hingegen verfügen beispielsweise optische Sensoren wie ein Linienscanner oder ein photogrammetrischer Sensor über eine hohe Messgeschwindigkeit, da rasch hintereinander Bilder von Teilbereichen des Werkstücks oder sogar des gesamten Werkstücks erfasst und ausgewertet werden können. Andererseits verfügt beispielsweise der taktile Sensor oder etwa ein Weißlichtsensor über eine hohe Messgenauigkeit, jedoch über eine relativ geringe Messgeschwindigkeit. Linienweise oder flächig messende optische Sensoren haben jedoch bei der Erfassung von Höheninformationen, das heißt üblicherweise entlang der optischen Achse in der vertikalen z-Richtung des Werkstücks, erhebliche Messunsicherheiten bei der Erfassung der Koordinaten in dieser Dimension, das heißt der Erstreckung in z-Richtung.

Die US 2004/0234025 A1 offenbart eine Vorrichtung zur Bestimmung der Ist-Position einer Struktur eines Untersuchungsobjektes in einem Koordinatensystem, wobei die Position des Untersuchungsobjektes mittels eines Computertomographen und mittels eines Multisensor-Koordinatenmessgeräts beispielsweise taktil erfasst wird, wobei der Computertomograph und das Multisensor-Koordinatenmessgerät zu einer einzigen Vorrichtung zusammengefasst sind.

Die EP 1 579 168 B1 offenbart ein Verfahren zum Prüfen eines Gegenstands bei dem zunächst ein genaues, taktiles Abtasten erfolgt und nachfolgend eine berührungslose und üblicherweise ungenauere Vermessung. Daraus wird eine so genannte Fehlerkarte erstellt mit den Messunterschieden zwischen taktiler und berührungsloser Antastung. Beim nachfolgenden berührungslosen Vermessen baugleicher Gegenstände wird diese Fehlerkarte dazu verwendet, die relativ ungenauen Messergebnisse zu korrigieren.

Die eingangs genannte Druckschrift WO 2005/100908 zeigt die Verwendung eines taktilen Sensors zur Verbesserung der Kalibration eines optischen Sensors. Dabei wird eine Kalibrationsmatrix des optischen Sensors jeweils für eine nachfolgende Messung verbessert.

Des Weiteren zeigen die Druckschriften US 2007/0035744 A1, US 5 955 661 A und DE 197 47 027 A1 weitere Vorrichtungen, die ein Messobjekt mit verschiedenen Sensoren vermessen.

Des Weiteren zeigt die Druckschrift DE 10 2010 029 144 A1 ein Verfahren zur berührungslosen Bestimmung der Dicke einer Materialbahn, insbesondere Faserstoffbahn, mittels einer optischen Sensoranordnung, die wenigstens einen optischen Dickensensor umfasst. Es zeichnet sich dadurch aus, dass eine optische Sensoranordnung verwendet wird, die außer dem wenigstens einen optischen Dickensensor zusätzlich wenigstens einen weiteren optischen Sensor umfasst, dass die Materialbahn über diesen weiteren optischen Sensor mit Licht beaufschlagt wird, das mit einem flacheren Winkel auf die Oberfläche der Materialbahn auftrifft, als dies bei dem Licht vom optischen Dickensensor der Fall Ist, und über einen dem weiteren optischen Sensor zugeordneten Detektor zumindest im Wesentlichen nur solche reflektierte Strahlen des vom weiteren optischen Sensor kommenden Lichts empfangen werden, die zumindest im Wesentlichen nur auf den höchsten Punkten der Materialbahn auftreffen, und dass die über den weiteren Sensor ermittelten Werte zur Korrektur des über den Dickensensor ermittelten Dickenwertes herangezogen werden.

Ausgehend von diesem Stand der Technik soll die Aufgabe gelöst werden, ein Verfahren zu Auswertung von Koordinatenmessdaten anzugeben, dass die Genauigkeit der Auswertung erhöht, ohne den gesamten Messablauf wesentlich zu verlangsamen.

Gemäß einem ersten Aspekt der Erfindung wird daher ein Verfahren zur Auswertung von Koordinatenmessdaten eines Messobjekts mit den folgenden Schritten vorgeschlagen:
- Bereitstellen eines ersten Koordinatenmessdatensatzes, wobei der erste Koordinatenmessdatensatz durch einen ersten Sensor erfasste erste Raumkoordinaten mehrerer Auswertungsmesspunkte eines Auswertungsbereichs tungsbereichs repräsentiert, wobei der Auswertungsbereich zumindest ein Teilbereich einer Oberfläche oder eines Volumens des Messobjekts ist;

- Bereitstellen eines zweiten Koordinatenmessdatensatzes, wobei der zweite Koordinatenmessdatensatz durch einen zweiten Sensor erfasste zweite Raumkoordinaten von zumindest einem Stützmesspunkt innerhalb des Auswertungsbereichs repräsentiert, wobei jeder Stützmesspunkt einem bestimmten Auswertungsmesspunkt zuordenbar ist und die Auswertungsmesspunkte zumindest einen bestimmten Auswertungsmesspunkt aufweisen;
- Ersetzen der ersten Raumkoordinaten zumindest eines der jeweiligen bestimmten Auswertungsmesspunkte zumindest in einer ersten Dimension durch die zweiten Raumkoordinaten des jeweiligen Stützmesspunkts;
- Ermitteln einer Relation zwischen den Auswertungsmesspunkten des ersten Koordinatenmessdatensatzes zumindest in der ersten Dimension, so dass eine Relation zwischen dem zumindest einen bestimmten Auswertungsmesspunkt und zumindest einem weiteren Auswertungsmesspunkt bekannt ist; und
- Korrigieren der ersten Raumkoordinaten des zumindest einen weiteren Auswertungsmesspunkts zumindest in der ersten Dimension basierend auf der ermittelten Relation.

Das Verfahren gemäß dem ersten Aspekt kann allgemein und/oder in einer seiner Ausgestaltungen als computer-implementiertes Verfahren ausgestaltet sein.

Mittels des vorgeschlagenen Verfahrens wird es möglich, eine Vielzahl von Auswertungsmesspunkten eines Koordinatenmessdatensatzes eines ersten Sensors basierend auf weit weniger vermessenen Stützmesspunkten anzupassen. Auf diese Weise wird es möglich, die Genauigkeit einer Koordinatenmessung signifikant zu erhöhen, während der gesamte Mess- und Auswertungsvorgang nicht wesentlich verlangsamt wird. Insbesondere kann es sich beispielsweise bei dem ersten Sensor um einen optischen Sensor, der ein zweidimensionales Bild eines Messobjekts erfasst oder um beispielsweise einen Laserlichtschnittsensor handeln, der das Messobjekt scannt. Ein solcher Sensor misst mit vergleichsweise relativ großen Messunsicherheiten jedoch sehr schnell. Diese Messergebnisse können nun durch einige wenige Messungen mittels des zweiten Sensors, beispielsweise eines konfokalen Weißlichtsensors oder eines taktilen Sensors, gestützt werden. Natürlich dauert die Vermessung mittels eines konfokalen Weißlichtsensors oder eines taktilen Sensors länger, wenn die gleiche Zahl von Messpunkten bestimmt werden soll. Somit wäre es nicht sinnvoll, die gesamte Fläche bzw. den gesamten gescannten Bereich zusätzlich taktil oder mit Einzelpunkten zu erfassen. Dann könnte im Grunde direkt eine lediglich taktile Messung durchgeführt werden, da der gesamte Geschwindigkeitsvorteil des ersten Sensors verloren gehen würde. Mittels des vorgeschlagenen Verfahrens ist es jedoch möglich, lediglich durch eine bestimmte Anzahl von Messungen mittels des zweiten Sensors die Messung des ersten Sensors zu stützen und zu präzisieren. Wie vorgeschlagen werden dann zunächst die bestimmten Auswertungsmesspunkte durch die Stützmesspunkte in zumindest einer Dimension ersetzt. Basierend auf der durch die Vermessung mittels des ersten Sensors bekannten Relation zwischen diesen bestimmten Auswertungsmesspunkten und den weiteren Auswertungsmesspunkten des ersten Koordinatenmessdatensatzes wird es nun möglich, auch weitere Auswertungsmesspunkte zu ersetzen bzw. deren Koordinatenwerte in zumindest einer Dimension über die Relation bzw. Nachbarschaftsbeziehungen zu korrigieren. Insgesamt werden also viele Auswertungsmesspunkte basierend auf wenigen Stützmessungen bearbeitet. Dies ermöglicht letztendlich die hohe Genauigkeit bei erhaltener hoher Geschwindigkeit.

Grundsätzlich ist ein Messwert, der beispielsweise einem Auswertungsmesspunkt und/oder einem Stützmesspunkt zugrunde liegt, eine Messgröße, die ein messender optischer oder taktiler Sensor erfasst. Auch bei einem schaltenden Sensor wird durch Auslösung eines Schaltimpulses ein Zeitsignal erzeugt und dann aufgenommene Messwerte zu dem Zeitpunkt aus einer aufgenommenen Datenreihe interpoliert erfasst. Die Erläuterung im Rahmen dieser Anmeldung erfolgt jedoch der Einfachheit halber lediglich basierend auf messenden optischen und/oder taktilen Sensoren. Es können natürlich auch andere Sensoren verwendet werden, wie kapazitive, magnetische oder elektrische Sensoren.

Jeder Sensor oder auch jede Taststiftkonfiguration eines taktilen Sensors hat eine richtungsabhängige Messunsicherheit, die auch von der räumlichen Lage des Sensors abhängen kann. Gründe hierfür liegen beispielsweise in den Steifigkeiten bzw. den dazu inversen Werten der Nachgiebigkeiten der Trägerstruktur, des Aufbaus der Kinematik, deren Fertigungstoleranzen oder aber auch im allgemeinen Funktionsprinzip des Sensors. Jedem Messpunkt kann somit eine räumliche Verteilung von Messunsicherheitswerten zugeordnet werden, die sowohl die sensoreigenen Messunsicherheiten umfassen als auch die bei der jeweiligen Messung vorherrschenden Messbedingungen berücksichtigen können, wie z.B. Scangeschwindigkeit, auftretende Beschleunigungen, Signal-to-Noise-Werte, Aussteuerung von Sensoren im Messbereich usw. Unter Umständen kann bei flächenhaft bzw. zweidimensional messenden optischen Sensoren oder linienhaft messenden Sensoren die räumliche Verteilung der Messunsicherheitswerte über die Fläche bzw. Linie zur Vereinfachung als konstant angenommen werden. Grundsätzlich kann zur Erhöhung der Genauigkeit jedoch auch von punktabhängigen Messunsicherheiten ausgegangen werden. Jeder Messunsicherheitswert enthält folglich deterministische als auch stochastische Anteile.

Im Rahmen der vorliegenden Anmeldung vermisst somit der erste Sensor das Messobjekt. Auch ein flächenhaft oder linienhaft messender Sensor kann in seinem Messergebnis jeweils in eine Vielzahl von Auswertungsmesspunkten aufgeteilt werden, da er immer eine bestimmte Auflösung aufweist. Bei einem linienhaft messenden Sensor liegt somit eine eindimensionale Erstreckung von Auswertungsmesspunkten vor. Bei einem flächenhaft messenden Sensor liegt eine sich zweidimensional oder flächenhaft erstreckende Mehrzahl von Auswertungsmesspunkten vor. Jedem Auswertungsmesspunkt sind Raumkoordinaten (x, y, z) zugeordnet, die ersten Raumkoordinaten. Dieses gesamte Messergebnis wird durch einen ersten Koordinatenmessdatensatz repräsentiert. Dieser erste Koordinatenmessdatensatz kann die entsprechenden Raumkoordinaten als klare Wiedergabe oder in anderer Datenform oder einem anderen Datenformat aufweisen. Letztendlich enthält der Koordinatenmessdatensatz jedoch die Information über die entsprechenden Raumkoordinaten der Auswertungsmesspunkte, er "repräsentiert" diese also.

Vermessen wird ein Auswertungsbereich des Messobjekts. Dieser Auswertungsbereich ist zumindest ein Teilbereich einer Oberfläche oder eines Volumens des Messobjekts. Selbstverständlich kann auch eine gesamte Oberfläche oder das gesamte Volumen des Messobjekts den Auswertungsbereich darstellen. Der Auswertungsbereich kann folglich zweidimensional oder dreidimensional sein. Auch ein eindimensionaler Auswertungsbereich, sprich eine Linie, ist ein Teilbereich einer Oberfläche und kann somit ein Auswertungsbereich sein.

Entsprechend erfasst der zweite Sensor zumindest einen Stützmesspunkt. Dieser zweite Sensor kann somit grundsätzlich ein punktförmig messender Sensor wie beispielsweise ein Weißlichtsensor oder ein taktiler Sensor sein. Der Stützmesspunkt lässt sich ebenfalls durch Raumkoordinaten, die zweiten Raumkoordinaten, beschreiben und der zweite Koordinatenmessdatensatz repräsentiert diese zweiten Raumkoordinaten der Stützmesspunkte. Gegebenenfalls können zusätzliche Stützmesspunkte zwischen den gemessenen Stützmesspunkten eingefügt werden, die von dem zweiten Datensatz repräsentiert werden, beispielsweise durch Interpolation. Beispielsweise kann es sein, dass man auch schon für die Stützmesspunkte selber aus zum Beispiel den nächsten drei Nachbar-Stützmesspunkten oder ggf. auch unter Einbeziehung eines gewissen Umgebungsbereichs dann die Beziehung und Zuordenbarkeit von einem Stützmesspunkt und einem Auswertungsmesspunkt herzustellen.

Der zweite Sensor tastet ebenfalls das Messobjekt ab. Folglich ist jedem Stützmesspunkt ein entsprechender Auswertungsmesspunkt, der durch den ersten Sensor erfasst worden ist, zuzuordnen. Beispielsweise kann mittels des ersten Sensors ein zweidimensionales Bild einer Oberfläche des Messobjekts erfasst werden. Beispielsweise einem Auswertungsmesspunkt bei x = 10, y = 10 ist dann durch den ersten Sensor ein bestimmter z-Wert zuordenbar. Ein bei denselben Koordinaten x = 10 und y = 10 mit einem entsprechenden genaueren z-Wert erfasster Stützmesspunkt ist dann durch den zweiten Sensor beispielsweise taktil antastbar. Diesem Stützmesspunkt ist dann der durch den ersten Sensor erfasste Auswertungsmesspunkt aufgrund gleicher x- und y-Koordinaten zuordenbar und ist dann folglich der "bestimmte Auswertungsmesspunkt". Der "bestimmte Auswertungsmesspunkt" ist folglich ein mittels des ersten Sensors erfasster Punkt des Messobjekts, der zumindest hinsichtlich zweier Raumkoordinaten dem mittels des zweiten Sensors erfassten Stützmesspunkt entspricht. Die dritte Raumkoordinate kann bei übereinstimmend präzisen Messpunkten dann identisch sein. In der Regel werden aber, wie beschrieben wurde, mittels des zweiten genaueren Sensors andere Werte erfasst werden, die dann entsprechend im Rahmen der Auswertung nach der vorliegenden Erfindung zu behandeln sind.

Im Rahmen des Ersetzens der ersten Raumkoordinaten wird von zumindest einem der bestimmten Auswertungsmesspunkte in zumindest einer ersten Dimension durch die Raumkoordinate des jeweiligen zugeordneten Stützmesspunkts ersetzt. Natürlich kann dies für mehrere bestimmte Auswertungsmesspunkte erfolgen, zumindest jedoch für einen. Das vorgeschlagene Verfahren erschöpft sich jedoch nicht lediglich in diesem simplen Ersetzen der Koordinatenwerte in einer ersten Dimension. Um eine hohe Messgeschwindigkeit beibehalten zu können, sind auch Auswertungsmesspunkte in dieser ersten Dimension zu behandeln, für die kein zugeordneter Stützmesspunkt vorliegt.

Hierfür wird im Rahmen der vorliegenden Erfindung genutzt, dass grundsätzlich eine Stetigkeit des Messergebnisses des ersten Sensors angenommen werden kann. Zwar ist die absolute Genauigkeit des ersten Sensors in der ersten Dimension in der Regel schlechter als die des zweiten Sensors, es kann jedoch davon ausgegangen werden, dass die relative Genauigkeit innerhalb des ersten Koordinatenmessdatensatzes sehr gut ist. Ein beispielsweise ermitteltes Oberflächenprofil des Messobjekts wird in der Regel sehr genau dem tatsächlichen Oberflächenprofil entsprechen. Lediglich die absolute Lage der Oberfläche im Raum kann nicht mit der Genauigkeit des zweiten Sensors ermittelt werden. Aufgrund der Übernahme dieser Relation und "Aufsatteln" dieser Relation auf die wenigen erfassten Stützmesspunkte ist man jedoch dazu in der Lage, den gesamten ersten Koordinatenmessdatensatz in zumindest einer Dimension zu ersetzen bzw. zu korrigieren, ohne nennenswerte Geschwindigkeitsnachteile zu erleiden.

Grundsätzlich wird der erste Sensor an der Vorrichtung, d.h. beispielsweise dem Koordinatenmessgerät oder der Werkzeugmaschine, eingemessen, also sind seine Messkoordinaten auf das Maschinenkoordinatensystem referenziert. So kann jedem mittels des ersten Sensors erfassten Bild, beispielsweise dem Bild einer Kamera, auch ein Tiefenmesswert bzw. z-Messwert, für die Tiefe mitgegeben werden. Dieser Tiefenmesswert trägt eine gewisse Messunsicherheit, die in der Regel mit der Schärfentiefe skaliert ist, beispielsweise bei einem Drittel der Schärfentiefe liegt. Ein als zweiter Sensor vermessener konfokaler Weißlichtsensor hat in der Regel in der Tiefe eine Messunsicherheit z.B. im Bereich von einem Hundertstel der Schärfentiefe der Kamera, ist also um einen Faktor 33 genauer. Auch der Messort des zweiten Sensors, im Beispiel des konfokalen Weißlichtsensors, ist im Maschinenkoordinatensystem eingemessen und somit zu diesem referenziert. Natürlich können auch erste und zweite Sensoren verwendet werden, die nicht genau koaxial liegen und beliebig, auch an verschiedenen Trägerstrukturen, an der Vorrichtung angeordnet sind. Natürlich muss dann für eine Umrechnung der erfassten Koordinaten in ein Maschinenkoordinatensystem die tatsächliche Anordnung im Raum berücksichtigt werden und auch eine etwaige laterale Ausdehnungen eines Kamerafeldes berücksichtigt werden. Derartige Umrechnungen sind jedoch in der Messtechnik an sich bekannt und mittels gebräuchlicher Koordinatentransformationen umsetzbar, die ggf. auch statische und/oder dynamische Biegezustände der Vorrichtung berücksichtigen können und auch ortsabhängig variieren können.

Gemäß einem weiteren Aspekt der Erfindung wird dann ein Verfahren zum Ermitteln von Koordinatenmessdaten eines Messobjekts mit den Schritten des Erfassens eines ersten Koordinatenmessdatensatzes mittels eines ersten Sensors, eines Erfassens eines zweiten Koordinatenmessdatensatzes mittels eines zweiten Sensors, eines Auswertens mittels eines Verfahrens gemäß dem ersten Aspekt der Erfindung oder einer seiner Ausgestaltungen und des Ausgebens der Koordinatenmessdaten, insbesondere des ausgewerteten ersten Koordinatenmessdatensatzes, vorgeschlagen.

Das "Ausgeben" kann dabei ein Anzeigen auf einer Anzeigevorrichtung, ein Ausdrucken, ein Abspeichern auf einem nicht-flüchtigen Speichermedium oder mehrere dieser Ausgabearten umfassen.

Gemäß einem weiteren Aspekt wird eine Vorrichtung, insbesondere Koordinatenmessgerät oder eine Werkzeugmaschine, zum Vermessen eines Messobjekts vorgeschlagen, mit einem ersten Sensor zum Erfassen eines ersten Koordinatenmessdatensatzes, einem zweiten Satz zum Erfassen eines zweiten Koordinatenmessdatensatzes und einer Auswertungseinrichtung zum Auswerten des ersten Koordinatenmessdatensatzes und des zweiten Koordinatenmessdatensatzes gemäß einem Verfahren gemäß dem ersten Aspekt oder einer seiner Ausgestaltungen, insbesondere des Weiteren mit einer Ausgabeeinrichtung zum Ausgeben des ausgewerteten ersten Koordinatenmessdatensatzes.

Gemäß noch einem weiteren Aspekt wird ein Computerprogrammprodukt, insbesondere ein nicht-flüchtiges Computerprogrammprodukt, mit Programmcode zum Durchführen eines des Verfahrens gemäß dem ersten Aspekt der Erfindung oder einer seiner Ausgestaltungen, wenn das Computerprogramm auf einer Datenverarbeitungseinrichtung, insbesondere einer Auswertungseinrichtung eines Koordinatenmessgeräts oder einer Werkzeugmaschine, ausgeführt wird, vorgeschlagen.

Die eingangs gestellte Aufgabe wird daher vollkommen gelöst.

In einer Ausgestaltung des Verfahrens kann vorgesehen sein, dass vor dem Schritt des Ersetzens der ersten Raumkoordinaten des jeweiligen bestimmten Auswertungsmesspunkts zumindest in der ersten Dimension durch die zweiten Raumkoordinaten des jeweiligen Stützmesspunkts die folgenden Schritte durchgeführt werden:
- Bereitstellen eines eine Messunsicherheit repräsentierenden ersten Intervallbereichs für jeden Auswertungsmesspunkt, wobei der erste Intervallbereich die Messunsicherheit in zumindest der ersten Dimension der ersten Raumkoordinaten repräsentiert; und
- Ermitteln, ob die zweiten Raumkoordinaten eines jeweiligen Stützmesspunkts innerhalb des ersten Intervallbereichs des jeweiligen bestimmten Auswertungsmesspunkts liegen.

Auf diese Weise wird zunächst ein eine Messunsicherheit repräsentierender erster Intervallbereich für jeden Auswertungsmesspunkt festgelegt. Dies zumindest in der ersten Dimension, in der auch später eine Ersetzung stattfinden soll. Der Intervallbereich kann grundsätzlich in jeder Dimension verschieden sein. Auch kann für jeden Auswertungsmesspunkt ein anderer Intervallbereich festgestellt werden. Die Messunsicherheiten können also insgesamt anisotrop sein. Wie voranstehend kurz bereits ausgeführt wurde, kann aber beispielsweise auch auf eine gesamte Fläche oder Linie ein identischer Intervallbereich angenommen werden, sofern dies aufgrund der technischen Gegebenheiten, wie beispielsweise dem Messverfahren und den Umgebungsbedingungen, sinnvoll erscheint. Der Intervallbereich kann direkt die Messunsicherheit als Längenmaß angeben, beispielsweise ± 5 mm oder ähnlich. Anstelle der so angegebenen Messunsicherheiten kann natürlich auch ein Konfidenzwert bzw. ein Konfidenzintervall für die Messungen angegeben werden. In irgendeiner Form repräsentiert also der erste Intervallbereich die Messunsicherheit für jeden Auswertungsmesspunkt.

Dann wird ermittelt, ob die zweiten Raumkoordinaten eines jeweiligen Stützpunkts innerhalb dieses ersten Intervallbereichs liegen. Auf diese Weise kann erzielt werden, dass Messausreißer des zweiten Sensors nicht an der Ersetzung teilnehmen. Alternativ kann grundsätzlich auch vorgesehen sein, dass der erste Intervallbereich nicht an den Auswertungsmesspunkten, sondern beispielsweise gegen erwartete Messdaten anhand eines CAD-Modells festgelegt wird. Die Überprüfung, ob die zweiten Raumkoordinaten eines jeweiligen Stützmesspunkts innerhalb des ersten Intervallbereichs des jeweiligen bestimmten Auswertungsmesspunkts liegen, kann somit auch statt gegenüber den Auswertungsmesspunkten gegenüber erwarteten Messdaten erfolgen.

In einer weiteren Ausgestaltung des Verfahrens kann dann vorgesehen sein, dass die zweiten Raumkoordinaten zumindest eines Stützmesspunkts innerhalb des Intervallbereichs liegen, und wobei die ersten Raumkoordinaten eines jeweiligen Auswertungsmesspunkts nicht ersetzt werden, wenn ermittelt wurde, dass die zweiten Raumkoordinaten eines jeweiligen Stützmesspunkts nicht innerhalb des ersten Intervallbereichs des jeweiligen bestimmten Auswertungsmesspunkts liegen.

Somit wird zumindest eine Ersetzung einer ersten Raumkoordinate zumindest in der ersten Dimension durch eine zweite Raumkoordinate durchgeführt. Für jeden weiteren Stützmesspunkt wird dann die Abfrage durchgeführt und nur dann durchgeführt, wenn der Stützmesspunkt innerhalb des ersten Intervallbereichs liegt.

Gemäß einer weiteren Ausgestaltung des Verfahrens kann vorgesehen sein, dass der erste Sensor eine Kamera ist, die ein zweidimensionales Bild des Messobjekts aufnimmt, dem anhand einer Fokuseinstellung zumindest ein Tiefenwert zugeordnet ist.

Wie bereits voranstehend ausgeführt wurde, kann somit der erste Sensor ein flächenhaft messender optischer Sensor sein. Dieser optische Sensor ist auf eine bestimmte Messebene scharf eingestellt. Dem Bild kann somit ein Tiefenwert zugeordnet werden. Dieser trägt als Messunsicherheit einen Wert, der von der Schärfentiefe abhängt.

In einer weiteren Ausgestaltung des Verfahrens kann dann vorgesehen sein, dass in dem Schritt des Ermittelns einer Relation für Auswertungsmesspunkte in scharf abgebildeten Bereichen des zweidimensionalen Bildes festgelegt wird, dass sie denselben Tiefenwert aufweisen.

Es wird also davon ausgegangen, dass alle scharf abgebildeten Auswertungsmesspunkte denselben Tiefenwert aufweisen. Folglich ist die entsprechend ermittelte Relation, dass diese Auswertungsmesspunkte in der entsprechenden Tiefendimension denselben Wert aufweisen müssen. Ist nun einer dieser Auswertungsmesspunkte ein bestimmter Auswertungsmesspunkt, dessen Tiefenwert ersetzt wird, kann dann gefolgert werden, dass den weiteren Auswertungsmesspunkten (die ebenfalls scharf abgebildet sind) derselbe Tiefenwert zugeordnet werden kann. Insbesondere ist dies dann möglich, ohne dass weitere Stützmesspunkte erforderlich sind. Allen weiteren Auswertungsmesspunkten wird in der ersten Dimension die Raumkoordinate basierend auf lediglich einem einzigen Stützmesspunkt ersetzt.

In einer weiteren Ausgestaltung des Verfahrens kann vorgesehen sein, dass der erste Sensor eine Geometrie der Oberfläche oder des Volumens erfasst, wobei aus der Geometrie die Relation ermittelt wird.

Auf diese Weise kann mittels eines derartigen, beispielsweise optischen Sensors die Geometrie der gesamten Oberfläche oder des Volumens erfasst werden. Unter Geometrie sind hierbei die räumlichen Verhältnisse der Auswertungsmesspunkte relativ zueinander zu verstehen.

In einer Ausgestaltung des Verfahrens kann dann vorgesehen sein, dass der zweite Koordinatenmessdatensatz mindestens zwei Stützmesspunkte repräsentiert, so dass der erste Koordinatenmessdatensatz eine entsprechende Anzahl von bestimmten Auswertungsmesspunkten repräsentiert, und wobei der Schritt des Korrigierens der ersten Raumkoordinaten des zumindest einen weiteren Auswertungsmesspunkts zumindest in der ersten Dimension basierend auf der Geometrie und mittels einer Interpolation zwischen den bestimmten Auswertungsmesspunkten erfolgt.

Folglich können beispielsweise die weiteren Auswertungsmesspunkte durch interpolierte Werte ersetzt werden, die zwischen den bestimmten Auswertungsmesspunkten, bei denen bereits in der ersten Dimension die entsprechenden Raumkoordinaten durch die der Stützmesspunkte ersetzt wurden, interpoliert werden. Ist beispielsweise über die Geometrie ersichtlich, dass eine ebene Fläche vermessen wurde, kann auf diese Weise anhand einer linearen Interpolation zwischen zwei bestimmten Auswertungsmesspunkten auf die Werte der dazwischenliegenden weiteren Auswertungsmesspunkte gefolgert werden. Selbstverständlich sind auch komplexere Interpolationen denkbar, wie beispielsweise das Einfügen von die Geometrie abbildenden Splines, insbesondere in zweiter, dritter, vierter Ordnung oder in beliebig komplexer Ordnung.

In einer weiteren Ausgestaltung des Verfahrens kann vorgesehen sein, dass in dem Schritt des Korrigierens der ersten Raumkoordinaten des zumindest einen weiteren Auswertungsmesspunkts zumindest in der ersten Dimension die Geometrie auf die Stützmesspunkte eingepasst wird.

Folglich kann die Geometrie insgesamt auch derart "verschoben bzw. verformt" werden, dass sie auf die Stützmesspunkte bzw. die bestimmten Auswertungsmesspunkte eingepasst wird. Ist die Geometrie der Auswertungsmesspunkte bekannt, werden zunächst die bestimmten Auswertungsmesspunkte in ihrer ersten Dimension ersetzt. Aufgrund der bekannten Relation über die Geometrie können dann auch entsprechend die weiteren Auswertungsmesspunkte ersetzt bzw. verschoben werden. In einem Idealfall findet lediglich ein translatorisches Verschieben der Geometrie in der ersten Dimension statt. Natürlich können aber auch Verkippungen bzw. Verdrehungen der Geometrie stattfinden.

In einer Ausgestaltung des Verfahrens kann dann vorgesehen sein, dass ein Schritt des Bereitstellens eines eine Messunsicherheit repräsentierenden ersten Intervallbereichs für jeden Auswertungsmesspunkt durchgeführt wird, wobei der erste Intervallbereich die Messunsicherheit in zumindest der ersten Dimension der ersten Raumkoordinaten repräsentiert; und wobei das Einpassen mittels eines Optimierungsverfahrens erfolgt, wobei für den zumindest einen weiteren Auswertungsmesspunkts der erste Intervallbereich als Optimierungsbereich genutzt wird.

Ein geeignetes Optimierungsverfahren kann beispielsweise ein Verfahren der geringsten quadratischen Abweichung bzw. Fehlers oder ein ähnliches Optimierungsverfahren sein. Auf diese Weise wird die Geometrie dann derart angepasst, dass sie möglichst optimal, d.h. mit geringen Abweichungen eingepasst wird. Jetzt können die ersten Intervallbereiche als Optimierungsbereich genutzt werden. Diese können über die gesamte Geometrie als identisch angenommen werden, es kann natürlich auch der Fall sein, dass eine bestimmte Sensorart aber anisotrope Intervallbereiche aufweist. Beispielsweise kann bei einer durch einen Liniensensor erfassten Fläche der erste Intervallbereich im Zentrum der Fläche relativ gering sein und aber beispielsweise zu den Kanten bzw. Ecken hin in seiner Größe zunehmen. Auf diese Weise ist über die Intervallbereiche für jeden Auswertungsmesspunkt vorgegeben, wie weit die Geometrie "verformt" werden kann, um sie im Rahmen der Optimierung auf die bestimmten Auswertungsmesspunkte bzw. die Stützmesspunkte einzupassen.

In einer weiteren Ausgestaltung des Verfahrens kann vorgesehen sein, dass ein Schritt des Bereitstellens eines eine Messunsicherheit repräsentierenden zweiten Intervallbereichs für jeden Stützmesspunkt durchgeführt wird, wobei der zweite Intervallbereich die Messunsicherheit in zumindest der ersten Dimension der zweiten Raumkoordinaten repräsentiert, wobei das Einpassen mittels eines Optimierungsverfahrens erfolgt, und wobei der zweite Intervallbereich als Optimierungsbereich genutzt wird.

Insofern kann alternativ oder kumulativ zur Nutzung des ersten Intervallbereichs auch der zweite Intervallbereich als Optimierungsbereich genutzt werden. Dieser wird geringer als der erste Intervallbereich sein, da der zweite Sensor in der ersten Dimension deutlich genauer misst. Auf diese Weise kann jedoch die Optimierung vereinfacht und insbesondere auf geringere Abweichungen der Geometrie optimiert werden.

In einer weiteren Ausgestaltung des Verfahrens kann vorgesehen sein, dass ein Schritt des Bereitstellens eines eine Messunsicherheit repräsentierenden ersten Intervallbereichs für jeden Auswertungsmesspunkt durchgeführt wird, wobei der erste Intervallbereich die Messunsicherheit in zumindest der ersten Dimension der ersten Raumkoordinaten repräsentiert; und dass ein Schritt des Bereitstellens eines eine Messunsicherheit repräsentierenden zweiten Intervallbereichs für jeden Stützmesspunkt durchgeführt wird, wobei der zweite Intervallbereich die Messunsicherheit in zumindest der ersten Dimension der zweiten Raumkoordinaten repräsentiert, und wobei der erste Sensor und der zweite Sensor derart gewählt sind, dass der zweite Intervallbereich zumindest in der ersten Dimension kleiner als der erste Intervallbereich ist.

Mögliche Sensorkombinationen sind beispielsweise eine Kamera als erster Sensor und ein konfokaler Weißlichtsensor oder ein taktiler Sensor als zweiter Sensor. Der erste Sensor kann beispielsweise auch ein Laserlichtschnittsensor sein. Grundsätzlich handelt es sich bei dem ersten Sensor um einen Sensor, der mit hoher Geschwindigkeit, aber relativ geringer Genauigkeit misst. Der zweite Sensor ist ein Sensor, der mit relativ geringer Geschwindigkeit, jedoch mit relativ hoher Genauigkeit misst.

Die beschriebene Zuordnung von bestimmtem Auswertungsmesspunkt und Stützmesspunkt kann richtungsabhängig variieren und die jeweiligen Richtungen sind meist die Richtungen in den jeweiligen Sensorkoordinaten, da diese Richtungen typischerweise als sensorfestes Koordinatensystem dann das Auflösungsvermögen des Sensors beschreiben. Je nach Bauart des Sensors kann das Koordinatensystem zumindest näherungsweise beispielsweise ein kartesisches, oder Zylinder- oder ein Kugelkoordinatensystem sein. Es können auch Rohkoordinaten betrachtet werden, die noch nicht auf das ideale Koordinatensystem korrigiert sind. Da unterschiedliche Sensoren verwendet werden, können also auch die richtungsabhängigen Messunsicherheiten bzw. Auflösungseigenschaften sehr unterschiedlich sein.

In einer weiteren Ausgestaltung des Verfahrens kann vorgesehen sein, dass die Schritte des Ersetzens und des Korrigierens nur in der ersten Dimension der Raumkoordinaten durchgeführt werden.

Somit wird lediglich eine Dimension der Raumkoordinaten ersetzt. Grundsätzlich können jedoch auch mehr als eine Raumkoordinate ersetzt werden.

In einer weiteren Ausgestaltung des Verfahrens kann vorgesehen sein, dass die Schritte des Ersetzens, des Ermittelns und des Korrigierens zumindest in der ersten Dimension der Raumkoordinaten durchgeführt werden, und dass die Schritte des Ersetzens, des Ermittelns und des Korrigierens zumindest in einer zweiten Dimension durchgeführt werden, wobei in der zweiten Dimension der erste Koordinatenmessdatensatz durch den zweiten Sensor erfasste erste Raumkoordinaten mehrerer Auswertungsmesspunkte des Auswertungsbereichs repräsentiert, und wobei in der zweiten Dimension der zweite Koordinatenmessdatensatz durch den ersten Sensor erfasste zweite Raumkoordinaten von zumindest einem Stützmesspunkt innerhalb des Auswertungsbereichs repräsentiert.

In Bezug auf zumindest eine zweite Dimension können die Datensätze also ihre "Rolle" als Auswertungsmesspunkt bzw. Stützmesspunkte tauschen. Wozu welcher der Datensätze in einer jeweiligen Dimension verwendet wird, kann beispielsweise letztendlich von der relativen Messunsicherheit in der jeweiligen Messrichtung oder auch von der Punktdichte der Erfassung abhängen. Beispielsweise kann in der ersten Dimension mit der ursprünglichen Zuweisung gearbeitet werden und diese in der zweiten Dimension getauscht sein. In einer dritten Dimension wird beispielsweise dann gar nicht gearbeitet. Es kann aber selbstverständlich auch beispielsweise in zwei Dimensionen mit der ursprünglichen Zuweisung gearbeitet werden und nur für die übrige Dimension getauscht sein. Natürlich kann auch nur für eine Dimension die ursprüngliche Zuweisung genutzt werden und für zwei Dimension (die zweite und eine dritte) die Zuweisung getauscht sein.

Grundsätzlich ist es möglich, auch mit weiteren Sensoren über den ersten und den zweiten Sensor hinaus Sensordaten über z.B. auch komplementären Messungen zu erfassen. Beispielsweise können Rauheitsmessungen, Farbmessungen, Oberflächenhärte oder weitere Formmessungen oder vollständige Volumenmessungen, beispielsweise mittels eines Computertomographen, ergänzt werden. So gewonnene Informationen können einem jeweiligen Auswertungsmesspunkt als zusätzliche Informationen zugeordnet werden. Diese Art der Zusammenführung von Sensordaten wird auch als multimodale Messung bezeichnet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel einer Vorrichtung gemäß einem Aspekt der Erfindung,
- Fig. 2: ein Ausführungsbeispiel eines Verfahrens zum Auswerten von Koordinatenmessdaten gemäß einem Aspekt der Erfindung,
- Fig. 3: eine Illustration zur Verdeutlichung der Umsetzung des Verfahrens anhand eines Kamerabilds eines optischen Sensors,
- Fig. 4: eine weitere Illustration zur Verdeutlichung der Umsetzung des Verfahrens anhand einer optimierten Einpassung einer Oberfläche eines Messobjekts,
- Fig. 5: ein weiteres Ausführungsbeispiel eines Verfahrens zum Auswerten von Koordinatenmessdaten der Erfindung,
- Fig. 6: noch ein weiteres Ausführungsbeispiel eines Verfahrens zum Auswerten von Koordinatenmessdaten der Erfindung,
- Fig. 7: ein Ausführungsbeispiel eines Verfahrens zum Vermessen eines Messobjekts.

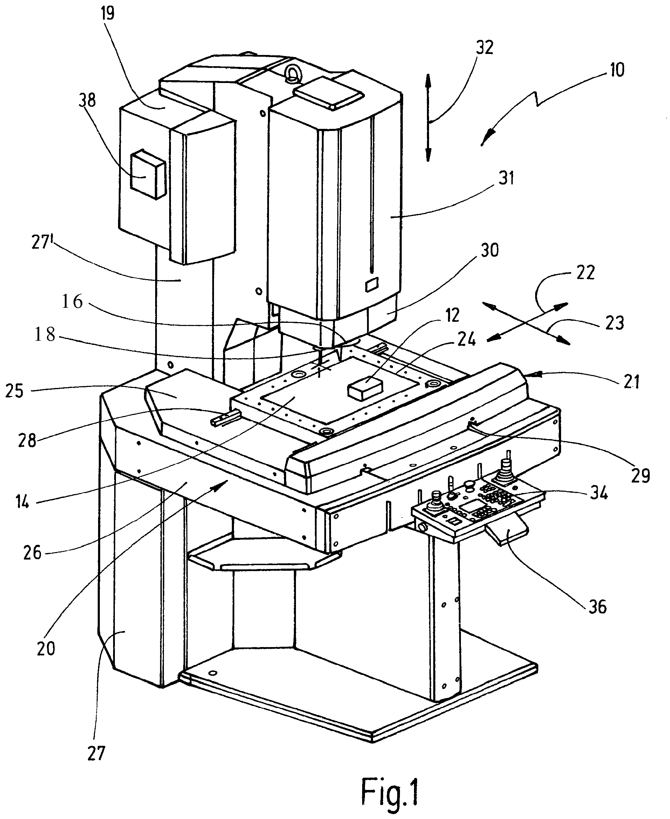

Die Fig. 1 zeigt eine Vorrichtung 10 zum Vermessen eines Messobjekts 12, das auf einem Messobjektträger 14 angeordnet ist. In der dargestellten Ausführungsform handelt es sich bei der Vorrichtung 10 um ein Koordinatenmessgerät. Die dargestellte Ausführungsform zeigt lediglich beispielhaft einen Tischaufbau. Das Messobjekt 12 wird mittels eines ersten Sensors 16, bspw. eines optischen Sensors vermessen, insbesondere einer Kamera. Des Weiteren wird das Messobjekt 12 durch einen zweiten Sensor 18 vermessen, einen taktilen Sensor oder einen weiteren optischen Sensor, insbesondere einen Weißlichtsensor. Grundsätzlich kann eine beliebige Anzahl von taktilen und/oder optischen Sensoren an der Vorrichtung vorgesehen sein.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar, so beispielsweise auch der zusätzliche Einsatz zum Inspizieren von Oberflächen.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie etwa von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist ein Tischaufbau, wie er in der Fig. 1 gezeigt ist. Ein Beispiel für einen solchen Tischaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen. Auf diese Weise lassen sich einfach viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Derartige Sensorsysteme bzw. Sensorköpfe, die sowohl taktile als auch optische Sensoren tragen, finden in der Koordinatenmesstechnik zunehmend Bedeutung. Eine Kombination taktiler und optischer Sensoren ermöglicht es, in einem einzigen Koordinatenmessgerät die Vorteile der hohen Genauigkeit eines taktilen Messsystems mit der Geschwindigkeit eines optischen Messsystems zu kombinieren. Des Weiteren werden Kalibriervorgänge bei Sensorwechseln vermieden, ebenso wie ein eventuelles Umspannen eines Werkstücks.

Klassischerweise ist der Sensorkopf, der auch als Sensorsystem bezeichnet werden kann, mit einem Trägersystem verbunden, welches das Sensorsystem stützt und bewegt. Im Stand der Technik sind verschiedene Trägersysteme bekannt, beispielsweise Portalsysteme, Ständer-, Horizontalarm- und Armsysteme, alle Arten von Robotersystemen und letztlich geschlossene CT-Systeme bei mit Röntgenstrahlen arbeitenden Sensorsystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Die Vorrichtung 10 ist somit nicht auf den in der Fig. 1 dargestellten Tischaufbau und den entsprechenden Messobjektträger 14 beschränkt, sondern können auch mit allen anderen Arten von Trägersystemen Verwendung finden. Des Weiteren kann die Vorrichtung 10 auch allgemein in Multi-Sensor-Messsystemen oder auch in Werkzeugmaschinen Anwendung finden.

Die Vorrichtung 10 weist des Weiteren einen Messtisch 20 auf. An dem Messtisch 20 befindet sich eine Positioniereinrichtung 21. Diese ist insbesondere dazu vorgesehen, um das Messobjekt 12 parallel zu einer X-Achse 22 und zu einer Y-Achse 23 zu positionieren.

Zur Positionierung können beispielsweise ein X-Tisch 24 und ein Y-Tisch 25 vorgesehen sein. Der X-Tisch 24 ist parallel zu der X-Achse 21 und der Y-Tisch 25 ist parallel zu der Y-Achse 23 bewegbar. Beide sind auf einer Grundplatte 26 angeordnet. Die Grundplatte 26 wird von einem Maschinengestell 27 bzw. 27' getragen.

Die Bewegung des X-Tisches 24 und des Y-Tisches 25 wird durch Linearführungen 28 in X-Richtung und in Linearführungen 29 in Y-Richtung geführt. Dieser Aufbau entspricht dem sogenannten "Tischaufbau". Wie voranstehend ausgeführt wurde, sind auch andere Trägersysteme denkbar.

Die Vorrichtung 10 weist des Weiteren einen Messkopf 30 auf. An dem Messkopf 30 können einer oder mehrere taktile Sensoren 16 angeordnet sein. Darüber hinaus ist einer oder mehrere weitere optische Sensoren 18 an oder in dem Messkopf 30 angeordnet. Der Messkopf 30 dient also dazu, den einen ersten Sensoren 16 und den zweiten Sensor 18 mit einer Trägerstruktur, beispielsweise einem Z-Schlitten 31, zu koppeln. Bei dem Messkopf 30 kann es sich um einen geschlossenen Gehäuseaufbau handeln, er kann jedoch auch offen ausgebildet sein. Beispielsweise kann der Messkopf 30 auch die Form einer einfachen Platte aufweisen, an der der eine oder mehrere optische Sensoren 18 und eventuell der taktile Sensor 16 befestigt ist. Darüber hinaus sind auch alle weiteren möglichen Formen zum Koppeln der Sensoren 16, 18 mit der Trägerstruktur denkbar. Insbesondere kann jeder der Sensoren 16, 18 auch separat an einer Trägerstruktur angebracht sein, so dass die Sensoren 16, 18 unabhängig voneinander und/oder in Gruppen relativ zu dem Messobjekt 12 bewegt werden können.

Der Messkopf 30 ist an dem Z-Schlitten 30 gehalten, der parallel zu einer Z-Achse 32 bewegbar ist. Diese Z-Achse 32 steht senkrecht auf der X-Achse 22 und auf der Y-Achse 23. Die X-Achse 22, die Y-Achse 23 und die Z-Achse 32 bilden somit ein kartesisches Koordinatensystem.

Die Vorrichtung 10 weist des Weiteren ein Bedienpult 34 auf. Mit dem Bedienpult 34 können die einzelnen Elemente der Vorrichtung 10 angesteuert werden. Des Weiteren können Eingaben an der Vorrichtung 10 vorgegeben werden. Grundsätzlich kann auch vorgesehen sein, dass in dem Bedienpult 34 oder an anderer Stelle eine Anzeigevorrichtung 36 angeordnet ist, um Messwertausgaben an einen Nutzer der Vorrichtung 10 zu richten.

Des Weiteren weist die Vorrichtung 10 eine Auswertungseinrichtung 19, die die Vorrichtung 10 regelt und die mittels der Sensoren 16, 18 erfassten Daten auswertet. Die Auswertung erfolgt mittels eines Computerprogrammprodukts 34. Grundsätzlich kann die Auswertungseinrichtung 19 aber auch entfernt von den Sensoren 16, 18 und der Trägerstruktur angeordnet sein, beispielsweise mittels einer drahtlosen oder drahtgebundenen Kommunikationsverbindung.

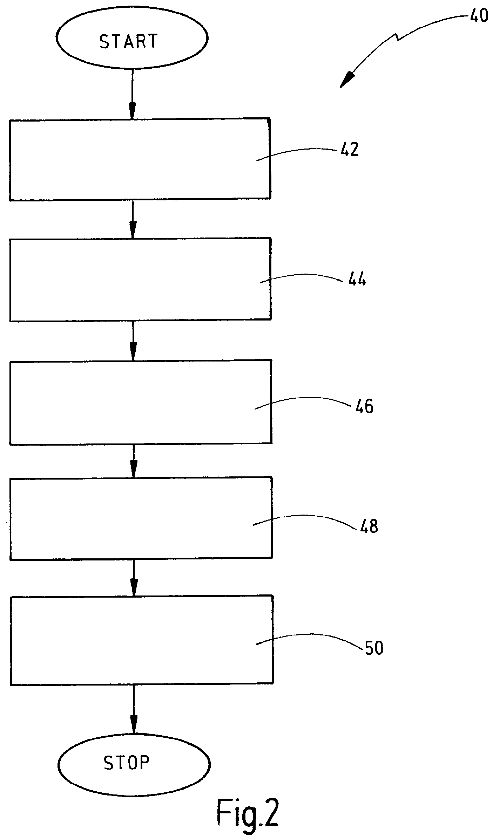

Die Fig. 2 zeigt eine Ausführungsform eines Verfahrens. Nach dem Beginn des Verfahrens wird zunächst der Schritt 42 des Bereitstellens eines durch den ersten Sensor 16 erfassten ersten Koordinatenmessdatensatzes durchgeführt, wobei der erste Koordinatenmessdatensatz erste Raumkoordinaten mehrerer Auswertungsmesspunkte eines Auswertungsbereichs repräsentiert, wobei der Auswertungsbereich zumindest ein Teilbereich einer Oberfläche oder eines Volumens des Messobjekts ist. Des Weiteren wird ein Schritt des Bereitstellens 44 eines durch den zweiten Sensor 18 erfassten zweiten Koordinatenmessdatensatzes durchgeführt, wobei der zweite Koordinatenmessdatensatz zweite Raumkoordinaten von zumindest einem Stützmesspunkt innerhalb des Auswertungsbereichs repräsentiert, wobei jeder Stützmesspunkt einem bestimmten Auswertungsmesspunkt zuordenbar ist und die Auswertungsmesspunkte zumindest einen bestimmten Auswertungsmesspunkt aufweisen. Die Schritte 42 und 44 können grundsätzlich auch in anderer Reihenfolge oder gleichzeitig durchgeführt werden.

In einem Schritt 46 des Ersetzens werden dann erste Raumkoordinaten zumindest eines der jeweiligen bestimmten Auswertungsmesspunkte zumindest in einer ersten Dimension, beispielsweise in Z-Richtung, durch die zweiten Raumkoordinaten des jeweiligen Stützmesspunkts ersetzt.

In einem Schritt 48 wird dann eine Relation zwischen den Auswertungsmesspunkten des ersten Koordinatenmessdatensatzes zumindest in der ersten Dimension durchgeführt, so dass eine Relation zwischen dem zumindest einen bestimmten Auswertungsmesspunkt und zumindest einem weiteren Auswertungsmesspunkt bekannt ist.

In einem Schritt des Korrigierens 50 werden dann die ersten Raumkoordinaten des zumindest einen weiteren Auswertungsmesspunkts zumindest in der ersten Dimension basierend auf der ermittelten Relation ersetzt.

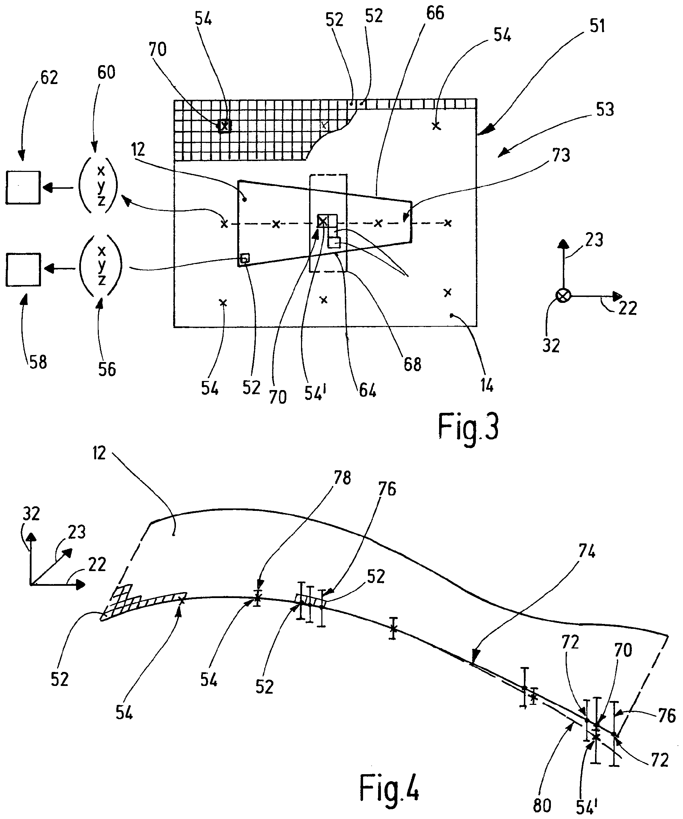

Dieses allgemeine Verfahren wird nun anhand zweier praktischer Ausführungsbeispiele, die in den Fig. 3 und 4 dargestellt sind, näher erläutert.

Die Fig. 3 zeigt ein Ausführungsbeispiel, in dem der erste Sensor 16 eine Kamera ist, die ein Bild 51 des Messobjekts 12 aufnimmt. Der zweite Sensor 18 soll in dem vorliegenden Beispiel dann ein konfokaler Weißlichtsensor sein. Folglich nimmt die Kamera das Bild 51 auf, das das Messobjekt 12 erfasst. Die Kamera soll in dem vorliegenden Beispiel eine bestimmte Pixelauflösung haben, so dass sich letztlich ein Raster von Auswertungsmesspunkten 52 über das Bild ergibt, die aus Übersichtsgründen in der Fig. 3 nicht vollflächig, sondern lediglich in einem ausgeschnittenen oberen Bereich angedeutet sind. Ein Auswertungsbereich 53 ist somit das gesamte Messobjekt 12, das in dem Bild 51 aufgenommen ist, bzw. die der Kamera zugewandte Oberfläche des Messobjekts 12.

Mittels des konfokalen Weißlichtsensors werden Stützmesspunkte 54 erfasst. Die Stützmesspunkte 54 sind als Kreuze in der Fig. 3 dargestellt. Die Fig. 3 weist beispielhaft insgesamt elf Stützmesspunkte auf. Jeder Stützmesspunkt 54 kann daher zweiten Raumkoordinaten 60 zugeordnet werden. Die Raumkoordinaten 60 aller Stützmesspunkte 54 werden durch einen zweiten Messdatensatz 62 repräsentiert. Gleiches ergibt sich für die Auswertungsmesspunkte 52. Jedem Auswertungsmesspunkt 52 können erste Raumkoordinaten 56 zugeordnet werden. Die x- und y-Koordinate ergeben sich durch die Lage in dem Bild 51. Die z-Koordinate wird anhand der Fokuseinstellung und/oder des Schärfentiefebereichs des optischen Sensors 16 jedem Auswertungsmesspunkt 52 zugeordnet, so dass sich entsprechende erste Raumkoordinaten 56 ergeben. Alle Raumkoordinaten 56 aller Auswertungsmesspunkte 52 werden durch einen ersten Koordinatenmessdatensatz 58 repräsentiert.

Auswertungsmesspunkte 52, die einem der Stützmesspunkte 54 entsprechende X- und Y-Koordinaten aufweisen, können dem entsprechenden Stützmesspunkt 54 unmittelbar zugeordnet werden und werden als bestimmte Auswertungsmesspunkte 70 bezeichnet. Während des Schritts des Ersetzens 46 werden die Z-Koordinaten der bestimmten Auswertungsmesspunkte durch diejenigen der entsprechenden Stützmesspunkte ersetzt. Somit weisen die bestimmten Auswertungsmesspunkte bereits in der Z-Dimension 32, die die "erste Dimension" im Sinne der Ansprüche in dem vorliegenden Ausführungsbeispiel ist, bereits die sehr hohe Genauigkeit des konfokalen Weißlichtsensors auf.

Des Weiteren erfolgt eine Ermittlung einer Relation eines bestimmten Auswertungsmesspunkts 70 zu weiteren Auswertungsmesspunkten 72. Die weiteren Auswertungsmesspunkte 72 sind solche, denen nicht unmittelbar in x- und y-Koordinaten ein Stützmesspunkt zugeordnet werden kann. In dem vorliegenden Beispiel wird eine Relation dahingehend ermittelt, dass ein scharf dargestellter Bereich 68 innerhalb des Bildes 51 ermittelt wird. Beispielsweise kann dies geschehen, indem ein Helligkeitsgradient über eine Kante der Oberflächen des Messobjekts bestimmt und ausgewertet wird. Daraus können sich dann unscharfe Kantenbereiche 66 und scharfe Kantenbereiche 64 ergeben. Auf diese Weise kann ein scharfer Bereich 68 ermittelt werden. Es kann dann für diesen scharfen Bereich festgelegt werden, dass die weiteren Auswertungsmesspunkte 72 innerhalb des scharfen Bereichs folglich denselben z-Wert wie ein in dem scharfen Bereich 68 liegender bestimmter Auswertungsmesspunkt 70 haben müssen. Folglich kann nun in einem weiteren Schritt des Korrigierens einem weiteren Auswertungsmesspunkt 72 der z-Wert des in dem scharfen Bereich 68 liegenden bestimmten Auswertungsmesspunkts 70 zugeordnet werden. Auf diese Weise kann für eine Vielzahl von Auswertungsmesspunkten eine verbesserte Genauigkeit in der Z-Richtung 32 erzielt werden, obwohl dort keinerlei Stützmessung erfolgt ist.

Eine weitere, kumulativ oder alternativ ausführbare Möglichkeit ist, zwischen zweien oder mehreren Stützmesspunkten eine Interpolation durchzuführen. Beispielsweise kann durch mehrere Stützmesspunkte 54 eine Interpolationslinie 73 gelegt werden. Ist beispielsweise bekannt, dass die der Kamera zugewandte Oberfläche des Messobjekts 12 eben ist, was beispielsweise auch mittels eines weiteren optischen Sensors, beispielsweise eines Laserlinienscanners oder eines anderen optischen Sensors erfasst sein kann, so könnte eine lineare Interpolation entlang der Linie 73 durchgeführt werden, die danach strebt, alle bestimmten Auswertungsmesspunkte entlang der Interpolationslinie 73 mit einer Geraden zu verbinden. So können auch Werte zwischen den Stützmesspunkten 54 gefunden werden, die dann auf der Interpolationslinie 73 liegenden weiteren Auswertungsmesspunkten entsprechende Z-Werte zuordnen können. Selbstverständlich kann die Interpolation auch in anderen Abschnitten oder jeweils immer nur zwischen zwei aneinander angrenzenden Stützmesspunkten erfolgen oder aber global über den ganzen Auswertungsbereich. Selbstverständlich ist des Weiteren nicht zwingend eine lineare Interpolation erforderlich. Abhängig von bekannten Rahmenbedingungen kann auch mit Kurven höherer Ordnung, sog. "Splines", oder auch flächig arbeitenden Fit-Funktionen gearbeitet werden, um die zwischen bestimmten Auswertungsmesspunkten 70 liegenden Z-Werte für weitere Auswertungsmesspunkte 72 zu interpolieren.

In der Fig. 4 ist ein weiteres Ausführungsbeispiel gezeigt. In diesem Ausführungsbeispiel soll etwa der erste Sensor 16 ein Laserlinienscanner sein, der eine Oberfläche des Messobjekts 12 gescannt hat und folglich eine Geometrie 74 erfasst hat. Als zweiter Sensor 18 hat hier beispielsweise ein taktiler Sensor gedient, der die Stützmesspunkte 54 angetastet hat. Die mit dem ersten Sensor erfasste Geometrie 74 erstreckt sich selbstverständlich auch dreidimensional, wie durch die angedeuteten Auswertungsmesspunkte 52 angegeben ist. Im folgenden Beispiel wird jedoch lediglich in Z-Richtung erläutert, wie eine Anpassung der Geometrie 74 auf die Stützmesspunkte 54 erfolgen kann.

Nachdem die Stützmesspunkte und die Auswertungsmesspunkte erfasst wurden, ist es zunächst wiederum möglich, die zuordenbaren bestimmten Auswertungsmesspunkte 70 in Z-Richtung 32 durch die Werte der Stützmesspunkte zu ersetzen.

Eine Relation ist in Form der Geometrie 74 bereits ermittelt. Es ist dabei hervorzuheben, dass der Schritt 48 des Ermittelns der Relation grundsätzlich auch vor dem Schritt 46 oder gleichzeitig mit diesem durchgeführt werden kann.

In dem Schritt 50, in dem für die weiteren Auswertungsmesspunkte 72 nunmehr die Z-Koordinate basierend auf der Geometrie 74 bzw. der Relation ersetzt wird, folgt nun ein Einpassen der Geometrie 74 mittels eines Optimierungsverfahrens in die Stützmesspunkte bzw. in die ersetzten bestimmten Auswertungsmesspunkte. In einem Idealfall hat der erste Sensor die Relation bzw. Geometrie derart genau bestimmt, dass lediglich ein Verschieben der Geometrie 74 in Z-Richtung 32 erfolgen kann und die Geometrie 74 dann exakt in die bestimmten Auswertungsmesspunkte eingepasst ist.

Da dies jedoch nicht stets der Fall ist, ist jedem Auswertungsmesspunkt 52 jeweils ein erster Intervallbereich 76 zugeordnet. Dieser repräsentiert eine Messunsicherheit in der Z-Richtung. Innerhalb dieses Intervallbereichs 76 ist es nun erlaubt, im Rahmen der Optimierung den Auswertungsmesspunkt zu verschieben, so dass mit möglichst geringen Abweichungen die Geometrie 74 eingepasst werden kann. Da selbstverständlich auch der zweite Sensor Messunsicherheiten aufweist, die wie dargestellt jedoch geringer als die des ersten Sensors sind, ist jeder Stützmesspunkt 54 bzw. dann jeder ersetzte bestimmte Auswertungsmesspunkt 70 mit einem zweiten Intervallbereich versehen, der kumulativ oder alternativ zu den ersten Intervallbereichen zur Optimierung als Optimierungsbereich genutzt werden kann. Die Intervallbereiche können global als konstant angenommen werden oder aber auch für jeden Punkt individuell bestimmt sein. Diese Messunsicherheitintervallbereiche sind vorab für jeden verwendeten Sensor zu ermitteln und somit bekannt. Auf diese Weise ist es dann möglich, im Rahmen der Optimierung die Geometrie 74 einzupassen. Auf diese Weise ist es möglich, durch nur relativ wenige Stützmesspunkte 54 die gesamte Geometrie 74 mit der sehr hohen Genauigkeit des zweiten optischen Sensors bzw. des taktilen Sensors einzuordnen, ohne den wesentlichen Geschwindigkeitsvorteil der optischen Erfassung zu verlieren und die gesamte Oberfläche des Messobjekts 12 taktil vermessen zu müssen.

Die dann eingepasste Geometrie kann infolge der Optimierung leicht von der ursprünglichen Geometrie 74 abweichen, wie durch die eingepasste Geometrie 80 in gestrichelten Linien angedeutet ist. Insbesondere kann es, wie in der Fig. 4 angedeutet ist, der Fall sein, dass in Randbereichen des erfassten Auswertungsbereichs 53 die Intervallbereiche aufgrund erhöhter Messunsicherheiten größer werden und dann gerade dort eine Einpassung der Geometrie 74 im Rahmen der Optimierung erfolgt, die zu einer abweichenden eingepassten Geometrie 80 führt. Ein solches Einpassen kann auch auf aneinander anschließende benachbarte Scan-Linien eines Laserlinienscanners angewendet werden.

Ein Laserlichtschnittsensor hat eine stark anisotrope Messunsicherheit. Liegt der projizierte Laserfächer in der x-z-Ebene mit x in Richtung Linienbreite und mit z als Messhöhe, so ist prinzipbedingt für die Höhenmessung die Messunsicherheit vom Wert z in Sensorkoordinaten abhängig. Auch die Auflösung des Sensors in y-Richtung hängt vom Messabstand ab, es gilt also x (z). Typischerweise ist die Messunsicherheit in x- kleiner als die in z-Richtung. In y-Richtung werden nur durch die Maschinenbewegung senkrecht zur x-z-Ebene Messwerte erzielt. Auch wenn die Messunsicherheit des Sensors allgemein schlechter ist als die des taktilen Sensors, ist der Sensor in der Lage, stetige Messwerte in x- und z-Koordinaten aufzunehmen und zudem bei der Maschinenbewegung in (y) auch komplette Bereiche in Punktwolken mit Datenwerten (xyz) zu erfassen. Da die Stetigkeit des Sensors stabil ist, auch wenn die Auflösung nicht beliebig groß ist, können analog dem Beispiel für überlappende Messpunkte der taktilen und der optischen Messung die entsprechenden Stützmesspunkte Auswertungsmesspunkte ersetzen. Das Kriterium für die Übernahme kann dann wie erläutert zeigen, dass der taktile Messwert an dem jeweiligen Ort des Auswertungsmesspunkts innerhalb des ersten Intervallbereichs bzw. Messunsicherheitsbereichs der optischen Messung liegt bzw. diesen zumindest berührt.

Für alle Zwischenpunkte, d.h. die weiteren Auswertungsmesspunkte zwischen den taktilen Stützstellen bzw. den bestimmten Auswertungsmesspunkten, kann dann aus der Stetigkeit der optischen Messpunkte, d.h. der Geometrie 74, auch dort eine interpolierte bzw. optimierte neue z-Koordinate berechnet werden. So kann in z eine ungenauere Messung auf die genauen Stützstellen der taktilen Messung umgerechnet werden. Im einfachsten idealen Fall wird so der optische Datensatz nur in z-Richtung verschoben. Bei einer größeren Zahl von Stützstellen aus taktiler Messung kann diese Einpassung auch abschnittsweise erfolgen und auch die jeweiligen lokalen Messunsicherheiten berücksichtigen. Bei globaleren Einpassungen über große Bereiche des Werkstücks kann auch eine gewichtete oder optimierte Einpassung der optisch erfassten Fläche auf die taktilen Stützpunkte erfolgen. Dabei kann der Optimierungsbereich wie erläutert für laterale Verschiebungen das Messunsicherheitsvolumen, d.h. der zweite Intervallbereich der taktilen Messung und der erste Intervallbereich der dazugehörigen optischen Messpunkte verwendet werden. Diese lokalen Verschiebungen können innerhalb der dreidimensionalen Unsicherheitsbereiche an den Stützstellen erfolgen.

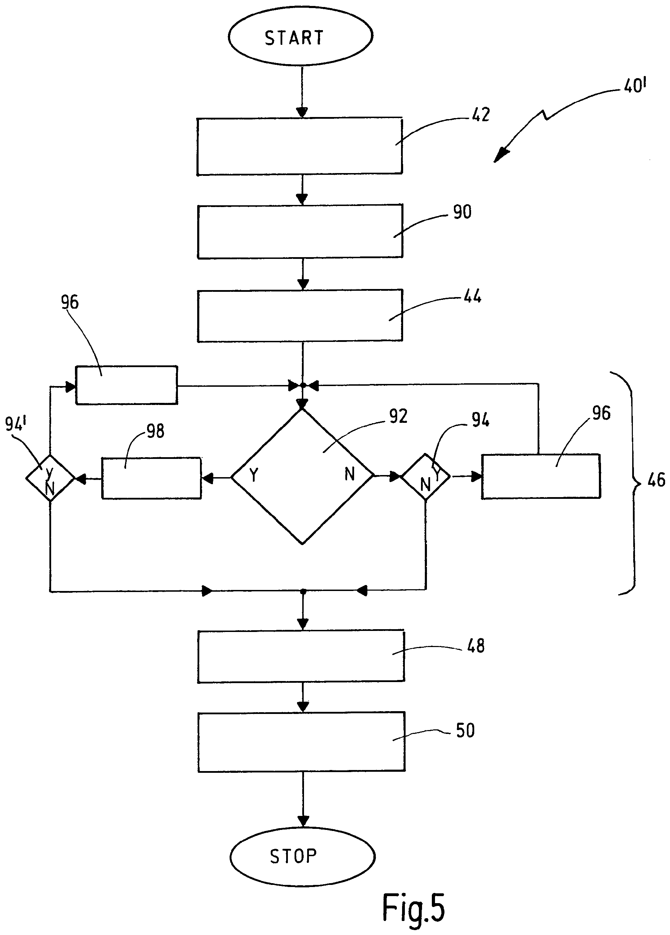

Die Fig. 5 zeigt eine weitere Ausführungsform des Verfahrens, das allgemein mit 40' bezeichnet ist. Gleiche Verfahrensschritte sind dabei mit gleichen Bezugszeichen gekennzeichnet und werden im Folgenden nicht erneut erläutert. Nach dem Ermitteln des ersten Koordinatenmessdatensatzes im Schritt 42 wird in einem Schritt 90 eines eine Messunsicherheit repräsentierenden ersten Intervallbereichs für jeden Auswertungsmesspunkt bereitgestellt, wobei der erste Intervallbereich die Messunsicherheit in zumindest der ersten Dimension der ersten Raumkoordinaten repräsentiert. Dieses kann im Rahmen des Schritts des Ersetzens 46 nunmehr dazu benutzt werden, zu bestimmen, ob unter den Stützmesspunkten eventuell Ausreißer vorhanden sind, die nicht zu einer Ersetzung führen sollen. Zumindest ein Auswertungsmesspunkt wird in der ersten Dimension jedoch ersetzt. Hierzu wird in einem Schritt 92 abgefragt, ob eine jeweilige Koordinate des Stützmesspunkts 54 innerhalb des ersten Intervallbereichs 76 des bestimmten zugeordneten Auswertungsmesspunkts 70 liegt. Ist dies der Fall, wird die entsprechende Koordinate in der ersten Dimension in dem Schritt 98 ersetzt. In einem Schritt 94 wird dann lediglich abgefragt, ob noch weitere Ersetzungen zu beurteilen sind, ist dies nicht der Fall, geht es in dem Verfahren mit Schritt 48 weiter, ansonsten wird die Abfrage für den nächsten Stützmesspunkt 54 wiederholt. Ist die Abfrage jedoch negativ, findet keine Ersetzung statt. Es wird dann zunächst ebenfalls in dem Schritt 94 abgefragt, ob weitere Stützungspunkte vorliegen, ist dies der Fall, wird in einem Schritt 96 zunächst zum nächsten Stützmesspunkt gewechselt und die Abfrage 92 erneut ausgeführt. Auf diese Weise werden lediglich diejenigen Stützmesspunkte zum Ersetzen herangezogen, die innerhalb eines zu erwartenden Toleranzbereiches liegen.

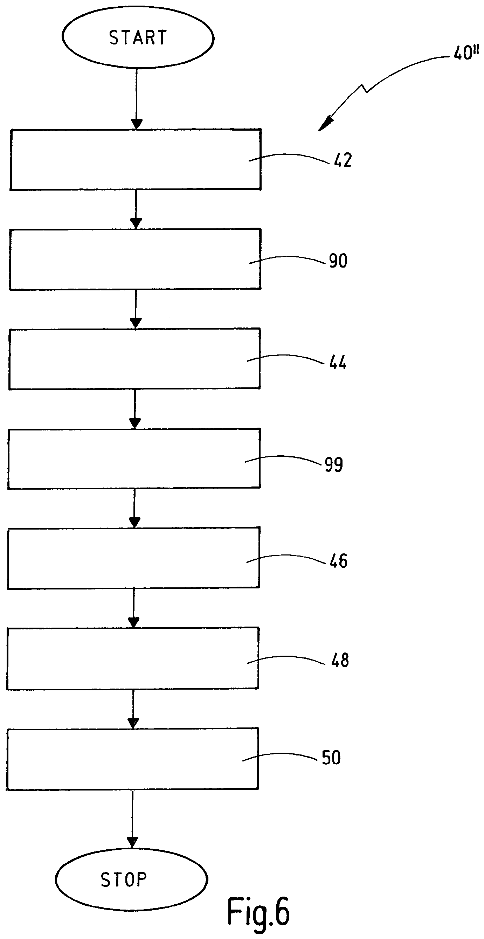

In der Fig. 6 wird eine weitere Ausführungsform des Verfahrens gezeigt, die generell mit 40" bezeichnet ist. Gleiche Verfahrensschritte sind wiederum mit gleichen Bezugszeichen gekennzeichnet und werden nicht erneut erläutert. In dem Verfahren wird in dieser Ausführungsform durchgeführt, dass im Rahmen des Schritts 50 eine Optimierung erfolgt, die eine Oberfläche oder ein Volumen des Messobjekts mittels der gefundenen Relation einpasst. Hierzu wird zusätzlich zu dem voranstehend geschilderten Schritt 90 zum Bestimmen der ersten Intervallbereiche 76 ein Schritt 99 zum Bestimmen zweiter Intervallbereiche 78 der Stützmesspunkte 54 ausgeführt. Grundsätzlich können die Schritte 42, 90, 44 und 99 auch in anderer Reihenfolge oder zumindest teilweise gleichzeitig stattfinden. Beispielsweise können die Schritte 42 und 44 sowie die Schritte 90 und 99 gleichzeitig ausgeführt werden. Es ist jedoch lediglich der Schritt 90 nach dem Schritt 42 und der Schritt 99 nach dem Schritt 44 durchzuführen.

Darauf folgend können dann die Schritte 46, 48 und 50 wie voranstehend insbesondere im Zusammenhang mit der Fig. 4 beschrieben durchgeführt werden.

Das im Zusammenhang mit der Fig. 1 beschriebene Verfahren 40, aber auch seine Ausgestaltungen, wie sie in den Fig. 2 bis 6 beschrieben wurden, können insbesondere als computer-implementiertes Verfahren umgesetzt sein.

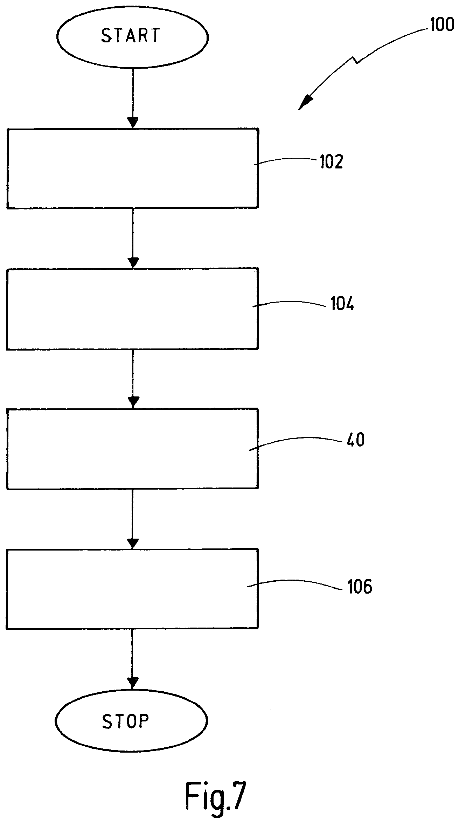

Die Fig. 7 zeigt ein Verfahren 100 zum Ermitteln von Koordinatenmessdaten eines Messobjekts. Dabei wird im Rahmen eines Schritts 102 ein erster Koordinatenmessdatensatz 58 mittels eines ersten Sensors 16 erfasst. Dann wird in einem Schritt 104 der zweite Koordinatenmessdatensatz 62 mittels des zweiten Sensors 18 erfasst. Die Schritte 102 und 104 können auch gleichzeitig oder in anderer Reihenfolge durchgeführt werden. Dann erfolgt ein Auswerten gemäß dem Verfahren 40 oder einer seiner Ausgestaltungen.

Letztlich folgt in einem Schritt 106 das Ausgeben der Koordinatenmessdaten, insbesondere des ausgewerteten ersten Koordinatenmessdatensatzes. Das Ausgeben kann in Form eines Anzeigens auf der Anzeigeeinrichtung 36 erfolgen. Es kann aber beispielsweise auch ein Ausgeben mittels eines Druckers erfolgen, einer akustischen Ausgabe oder ein Speichern auf einem nicht-flüchtigen Speichermedium.

## Patentansprüche

1. Verfahren (40) zur Auswertung von Koordinatenmessdaten eines Messobjekts (12), mit den folgenden Schritten:
• Bereitstellen (42) eines ersten Koordinatenmessdatensatzes (58), wobei der erste Koordinatenmessdatensatz (58) durch einen ersten Sensor (16) erfasste erste Raumkoordinaten (56) mehrerer Auswertungsmesspunkte (52) eines Auswertungsbereichs (53) repräsentiert, wobei der Auswertungsbereich (53) zumindest ein Teilbereich einer Oberfläche oder eines Volumens des Messobjekts (12) ist;
• Bereitstellen (44) eines zweiten Koordinatenmessdatensatzes (62), wobei der zweite Koordinatenmessdatensatz durch einen zweiten Sensor (18) erfasste zweite Raumkoordinaten (60) von zumindest einem Stützmesspunkt (54) innerhalb des Auswertungsbereichs (53) repräsentiert, wobei jeder Stützmesspunkt (54) einem bestimmten Auswertungsmesspunkt (70) zuordenbar ist und die Auswertungsmesspunkte (52) zumindest einen bestimmten Auswertungsmesspunkt (70) aufweisen;
**gekennzeichnet durch** die folgenden Schritte:
• Ersetzen (46) der ersten Raumkoordinaten (56) zumindest eines der jeweiligen bestimmten Auswertungsmesspunkte (70) zumindest in einer ersten Dimension (32) durch die zweiten Raumkoordinaten (60) des jeweiligen Stützmesspunkts (54);
• Ermitteln (48) einer Relation zwischen den Auswertungsmesspunkten des ersten Koordinatenmessdatensatzes (58) zumindest in der ersten Dimension (32), so dass eine Relation zwischen dem zumindest einen bestimmten Auswertungsmesspunkt (70) und zumindest einem weiteren Auswertungsmesspunkt (70) bekannt ist; und
• Korrigieren (50) der ersten Raumkoordinaten (56) des zumindest einen weiteren Auswertungsmesspunkts (70) zumindest in der ersten Dimension (32) basierend auf der ermittelten Relation.

2. Verfahren nach Anspruch 1, **dadurch gekennzeichnet, dass** vor dem Schritt des Ersetzens der ersten Raumkoordinaten (46) des jeweiligen bestimmten Auswertungsmesspunkts (70) zumindest in der ersten Dimension (32) durch die zweiten Raumkoordinaten (60) des jeweiligen Stützmesspunkts (54) die folgenden Schritte durchgeführt werden:
• Bereitstellen (90) eines eine Messunsicherheit repräsentierenden ersten Intervallbereichs für jeden Auswertungsmesspunkt, wobei der erste Intervallbereich die Messunsicherheit in zumindest der ersten Dimension (32) der ersten Raumkoordinaten (56) repräsentiert; und
• Ermitteln, ob die zweiten Raumkoordinaten (60) eines jeweiligen Stützmesspunkts (54) innerhalb des ersten Intervallbereichs des jeweiligen bestimmten Auswertungsmesspunkts (70) liegen.

3. Verfahren nach Anspruch 2, **dadurch gekennzeichnet, dass** die zweiten Raumkoordinaten (60) zumindest eines Stützmesspunkts (54) innerhalb des Intervallbereichs liegen, und wobei die ersten Raumkoordinaten (56) eines jeweiligen Auswertungsmesspunkts nicht ersetzt werden, wenn ermittelt wurde, dass die zweiten Raumkoordinaten (60) eines jeweiligen Stützmesspunkts (54) nicht innerhalb des ersten Intervallbereichs des jeweiligen bestimmten Auswertungsmesspunkts (70) liegen.

4. Verfahren nach einem der Ansprüche 1 bis 3, **dadurch gekennzeichnet, dass** der erste Sensor eine Kamera ist, die ein zweidimensionales Bild des Messobjekts (12) aufnimmt, dem anhand einer Fokuseinstellung zumindest ein Tiefenwert zugeordnet ist.

5. Verfahren nach Anspruch 4, **dadurch gekennzeichnet, dass** in dem Schritt der Ermittelns einer Relation für Auswertungsmesspunkte (52) in scharf abgebildeten Bereichen (68) des zweidimensionalen Bildes festgelegt wird, dass sie denselben Tiefenwert aufweisen.

6. Verfahren nach einem der Ansprüche 1 bis 3, **dadurch gekennzeichnet, dass** der erste Sensor eine Geometrie (74) der Oberfläche oder des Volumens erfasst, wobei aus der Geometrie (74) die Relation ermittelt wird.

7. Verfahren nach Anspruch 6, **dadurch gekennzeichnet, dass** der zweite Koordinatenmessdatensatz (62) mindestens zwei Stützmesspunkte (54) repräsentiert, so dass der erste Koordinatenmessdatensatz eine entsprechende Anzahl von bestimmten Auswertungsmesspunkten (70) repräsentiert, und wobei der Schritt des Korrigierens (50) der ersten Raumkoordinaten (56) des zumindest einen weiteren Auswertungsmesspunkts (70) zumindest in der ersten Dimension (32) basierend auf der Geometrie (74) und mittels einer Interpolation zwischen den bestimmten Auswertungsmesspunkten (70) erfolgt.

8. Verfahren nach Anspruch 6, **dadurch gekennzeichnet, dass** in dem Schritt des Korrigierens (50) der ersten Raumkoordinaten (56) des zumindest einen weiteren Auswertungsmesspunkts (70) zumindest in der ersten Dimension (32) die Geometrie (74) auf die Stützmesspunkte (54) eingepasst wird.

9. Verfahren nach Anspruch 8, **dadurch gekennzeichnet, dass** ein Schritt des Bereitstellens eines eine Messunsicherheit repräsentierenden ersten Intervallbereichs für jeden Auswertungsmesspunkt durchgeführt wird, wobei der erste Intervallbereich die Messunsicherheit in zumindest der ersten Dimension (32) der ersten Raumkoordinaten (56) repräsentiert; und wobei das Einpassen mittels eines Optimierungsverfahrens erfolgt, wobei für den zumindest einen weiteren Auswertungsmesspunkts (70) der erste Intervallbereich als Optimierungsbereich genutzt wird.

10. Verfahren nach Anspruch 8 oder 9, **dadurch gekennzeichnet, dass** ein Schritt des Bereitstellens eines eine Messunsicherheit repräsentierenden zweiten Intervallbereichs für jeden Stützmesspunkt (54) durchgeführt wird, wobei der zweite Intervallbereich die Messunsicherheit in zumindest der ersten Dimension (32) der zweiten Raumkoordinaten (60) repräsentiert, wobei das Einpassen mittels eines Optimierungsverfahrens erfolgt, und wobei der zweite Intervallbereich als Optimierungsbereich genutzt wird.

11. Verfahren nach einem der Ansprüche 1 bis 10, **dadurch gekennzeichnet, dass** ein Schritt des Bereitstellens eines eine Messunsicherheit repräsentierenden ersten Intervallbereichs für jeden Auswertungsmesspunkt durchgeführt wird, wobei der erste Intervallbereich die Messunsicherheit in zumindest der ersten Dimension (32) der ersten Raumkoordinaten (56) repräsentiert; und dass ein Schritt des Bereitstellens eines eine Messunsicherheit repräsentierenden zweiten Intervallbereichs für jeden Stützmesspunkt (54) durchgeführt wird, wobei der zweite Intervallbereich die Messunsicherheit in zumindest der ersten Dimension (32) der zweiten Raumkoordinaten (60) repräsentiert, und wobei der erste Sensor und der zweite Sensor derart gewählt sind, dass der zweite Intervallbereich zumindest in der ersten Dimension (32) kleiner als der erste Intervallbereich ist.

12. Verfahren nach einem der Ansprüche 1 bis 11, **dadurch gekennzeichnet, dass** die Schritte des Ersetzens (46), des Ermittelns (48) und des Korrigierens (50) zumindest in der ersten Dimension (32) der Raumkoordinaten (56, 60) durchgeführt werden, und dass die Schritte des Ersetzens (46), des Ermittelns (48) und des Korrigierens (50) zumindest in einer zweiten Dimension (22, 23) durchgeführt werden, wobei in der zweiten Dimension (22, 23) der erste Koordinatenmessdatensatz (58) durch den zweiten Sensor (18) erfasste erste Raumkoordinaten (56) mehrerer Auswertungsmesspunkte (52) des Auswertungsbereichs (53) repräsentiert, und wobei in der zweiten Dimension (22, 23) der zweite Koordinatenmessdatensatz durch den ersten Sensor (16) erfasste zweite Raumkoordinaten (60) von zumindest einem Stützmesspunkt (54) innerhalb des Auswertungsbereichs (53) repräsentiert.

13. Verfahren nach einem der Ansprüche 1 bis 11, **dadurch gekennzeichnet, dass** die Schritte des Ersetzens (46) und des Korrigierens (50) nur in der ersten Dimension (32) der Raumkoordinaten (56, 60) durchgeführt werden.

14. Verfahren (100) zum Ermitteln von Koordinatenmessdaten eines Messobjekts (12), mit den folgenden Schritten:
• Erfassen (102) eines ersten Koordinatenmessdatensatzes (58) mittels eines ersten Sensors (16);
• Erfassen (104) eines zweiten Koordinatenmessdatensatzes (62) mittels eines zweiten Sensor (18);
• Auswerten mittels eines Verfahrens (10) gemäß einem der Ansprüche 1 bis 13; und
• Ausgeben (106) der Koordinatenmessdaten, insbesondere des ausgewerteten ersten Koordinatenmessdatensatzes (58).

15. Vorrichtung (10), insbesondere Koordinatenmessgerät oder Werkzeugmaschine, zum Vermessen eines Messobjekts (12), mit einem ersten Sensor (16) zum Erfassen eines ersten Koordinatenmessdatensatzes (58), einem zweiten Sensor (18) zum Erfassen eines zweiten Koordinatenmessdatensatzes (62) und einer Auswertungseinrichtung (19) zum Auswerten des ersten Koordinatenmessdatensatzes (58) und des zweiten Koordinatenmessdatensatzes (62) gemäß einem Verfahren (10; 100) nach einem der Ansprüche 1 bis 14, insbesondere des Weiteren mit einer Ausgabeeinrichtung (36) zum Ausgeben des ausgewerteten ersten Koordinatenmessdatensatzes (58).

16. Computerprogrammprodukt (38) mit Programmcode zum Durchführen eines der Verfahren nach einem der Ansprüche 1 bis 13, wenn das Computerprogramm auf einer Datenverarbeitungseinrichtung, insbesondere einer Auswertungseinrichtung (19) eines Koordinatenmessgeräts oder einer Werkzeugmaschine, ausgeführt wird.

## Claims

1. Method (40) for evaluating coordinate measurement data of a test object (12), including the following steps:
• providing (42) a first coordinate measurement data record (58), wherein the first coordinate measurement data record (58) represents first spatial coordinates (56), captured by a first sensor (16), of a plurality of evaluation measurement points (52) of an evaluation region (53), wherein the evaluation region (53) is at least one portion of a surface or of a volume of the test object (12);
• providing (44) a second coordinate measurement data record (62), wherein the second coordinate measurement data record represents second spatial coordinates (60), captured by a second sensor (18), of at least one measurement node (54) within the evaluation region (53), wherein each measurement node (54) is assignable to a specific evaluation measurement point (70) and the evaluation measurement points (52) have at least one specific evaluation measurement point (70);
**characterized by** the following steps:
• replacing (46) the first spatial coordinates (56) of at least one of the respective specific evaluation measurement points (70) at least in a first dimension (32) with the second spatial coordinates (60) of the respective measurement node (54) ;
• ascertaining (48) a relationship between the evaluation measurement points of the first coordinate measurement data record (58) at least in the first dimension (32) such that a relationship between the at least one specific evaluation measurement point (70) and at least one further evaluation measurement point (70) is known; and
• correcting (50) the first spatial coordinates (56) of the at least one further evaluation measurement point (70) at least in the first dimension (32) on the basis of the ascertained relationship.

2. Method according to Claim 1, **characterized in that**, prior to the step of replacing the first spatial coordinates (46) of the respective specific evaluation measurement point (70) at least in the first dimension (32) with the second spatial coordinates (60) of the respective measurement node (54), the following steps are carried out:
• providing (90) a first interval range representing a measurement uncertainty for each evaluation measurement point, wherein the first interval range represents the measurement uncertainty in at least the first dimension (32) of the first spatial coordinates (56); and
• ascertaining whether the second spatial coordinates (60) of a respective measurement node (54) lie within the first interval range of the respective specific evaluation measurement point (70).

3. Method according to Claim 2, **characterized in that** the second spatial coordinates (60) of at least one measurement node (54) lie within the interval range, and wherein the first spatial coordinates (56) of a respective evaluation measurement point are not replaced if it was determined that the second spatial coordinates (60) of a respective measurement node (54) do not lie within the first interval range of the respective specific evaluation measurement point (70).

4. Method according to any one of Claims 1 to 3, **characterized in that** the first sensor is a camera which records a two-dimensional image of the test object (12), which is assigned at least one depth value on the basis of a focus setting.

5. Method according to Claim 4, **characterized in that** regions (68) of the two-dimensional image imaged in focus are set to have the same depth value in the step of ascertaining a relationship for evaluation measurement points (52).

6. Method according to any one of Claims 1 to 3, **characterized in that** the first sensor captures a geometry (74) of the surface or of the volume, wherein the relationship is ascertained from the geometry (74).

7. Method according to Claim 6, **characterized in that** the second coordinate measurement data record (62) represents at least two measurement nodes (54) such that the first coordinate measurement data record represents a corresponding number of specific evaluation measurement points (70), and wherein the step of correcting (50) the first spatial coordinates (56) of the at least one further evaluation measurement point (70) at least in the first dimension (32) is effectuated on the basis of the geometry (74) and by means of an interpolation between the specific evaluation measurement points (70).

8. Method according to Claim 6, **characterized in that** the geometry (74) is fitted to the measurement nodes (54) in the step of correcting (50) the first spatial coordinates (56) of the at least one further evaluation measurement point (70) at least in the first dimension (32).

9. Method according to Claim 8, **characterized in that** a step of providing a first interval range representing a measurement uncertainty is carried out for each evaluation measurement point, wherein the first interval range represents the measurement uncertainty in at least the first dimension (32) of the first spatial coordinates (56); and wherein the fitting is effectuated by means of an optimization method, wherein the first interval range is used as optimization range for the at least one further evaluation measurement point (70).

10. Method according to Claim 8 or 9, **characterized in that** a step of providing a second interval range representing a measurement uncertainty is carried out for each measurement node (54), wherein the second interval range represents the measurement uncertainty in at least the first dimension (32) of the second spatial coordinates (60), wherein the fitting is effectuated by means of an optimization method, and wherein the second interval range is used as optimization range.

11. Method according to any one of Claims 1 to 10, **characterized in that** a step of providing a first interval range representing a measurement uncertainty is carried out for each evaluation measurement point, wherein the first interval range represents the measurement uncertainty in at least the first dimension (32) of the first spatial coordinates (56); and **in that** a step of providing a second interval range representing a measurement uncertainty is carried out for each measurement node (54), wherein the second interval range represents the measurement uncertainty in at least the first dimension (32) of the second spatial coordinates (60), and wherein the first sensor and the second sensor are selected in such a way that, at least in the first dimension (32), the second interval range is smaller than the first interval range.

12. Method according to any one of Claims 1 to 11, **characterized in that** the steps of replacing (46), ascertaining (48) and correcting (50) are carried out at least in the first dimension (32) of the spatial coordinates (56, 60), and **in that** the steps of replacing (46), ascertaining (48) and correcting (50) are carried out at least in a second dimension (22, 23), wherein, in the second dimension (22, 23), the first coordinate measurement data record (58) represents first spatial coordinates (56), captured by the second sensor (18), of a plurality of evaluation measurement points (52) of the evaluation region (53), and wherein, in the second dimension (22, 23), the second coordinate measurement data record represents second spatial coordinates (60), captured by the first sensor (16), of at least one measurement node (54) within the evaluation region (53) .

13. Method according to any one of Claims 1 to 11, **characterized in that** the steps of replacing (46) and correcting (50) are only carried out in the first dimension (32) of the spatial coordinates (56, 60).

14. Method (100) for ascertaining coordinate measurement data of a test object (12), including the following steps:
• capturing (102) a first coordinate measurement data record (58) by means of a first sensor (16) ;
• capturing (104) a second coordinate measurement data record (62) by means of a second sensor (18) ;
• carrying out an evaluation by means of a method (10) according to any one of Claims 1 to 13; and
• outputting (106) the coordinate measurement data, in particular of the evaluated first coordinate measurement data record (58).

15. Apparatus (10), in particular a coordinate measuring machine or a machine tool, for measuring a test object (12), having a first sensor (16) for capturing a first coordinate measurement data record (58), a second sensor (18) for capturing a second coordinate measurement data record (62) and an evaluation device (19) for evaluating the first coordinate measurement data record (58) and the second coordinate measurement data record (62) according to a method (10; 100) according to any one of Claims 1 to 14, in particular moreover having an output device (36) for outputting the evaluated first coordinate measurement data record (58) .

16. Computer program product (38) having program code for carrying out one of the methods according to any one of Claims 1 to 13 when the computer program is executed on a data processing device, in particular an evaluation device (19) of a coordinate measuring machine or a machine tool.

## Revendications

1. Procédé (40) pour l'évaluation de données de mesure de coordonnées d'un objet de mesure (12), comportant les étapes consistant à :
- fournir (42) un premier ensemble de données de mesure de coordonnées (58), dans lequel le premier ensemble de données de mesure de coordonnées (58) représente des premières coordonnées spatiales (56), détectées par un premier capteur (16), de plusieurs points de mesure d'évaluation (52) d'une zone d'évaluation (53), dans lequel la zone d'évaluation (53) constitue au moins une zone partielle d'une surface ou d'un volume de l'objet de mesure (12) ;
- fournir (44) un deuxième ensemble de données de mesure de coordonnées (62), dans lequel le deuxième ensemble de données de mesure de coordonnées représente des deuxièmes coordonnées spatiales (60), détectées par un deuxième capteur (18), d'au moins un point de mesure auxiliaire (54) à l'intérieur de la zone d'évaluation (53), dans lequel chaque point de mesure auxiliaire (54) peut être associé à un point de mesure d'évaluation (70) déterminé et les points de mesure d'évaluation (52) comportent au moins un point de mesure d'évaluation (70) déterminé ;
**caractérisé par** les étapes consistant à :
- remplacer (46) les premières coordonnées spatiales (56) d'au moins l'un des points de mesure d'évaluation déterminés respectifs (70) dans au moins une première dimension (32) par les deuxièmes coordonnées spatiales (60) du point de mesure auxiliaire respectif (54) ;
- déterminer (48) une relation entre les points de mesure d'évaluation du premier ensemble de données de mesure de coordonnées (58) dans au moins la première dimension (32) de manière à ce qu'une relation entre l'au moins un point de mesure d'évaluation déterminé (70) et l'au moins un autre point de mesure d'évaluation (70) soit connue ; et
- corriger (50) les premières coordonnées spatiales (56) de l'au moins un autre point de mesure d'évaluation (70) dans au moins la première dimension (32) sur la base de la relation déterminée.

2. Procédé selon la revendication 1, **caractérisé en ce que**, avant l'étape de remplacement des premières coordonnées spatiales (46) du point de mesure d'évaluation déterminé respectif (70) dans au moins la première dimension (32) par les deuxièmes coordonnées spatiales (60) du point de mesure auxiliaire respectif (54), les étapes suivantes sont effectuées :
- fournir (90) une première plage représentant une incertitude de mesure pour chaque point de mesure d'évaluation, dans lequel la première plage représente l'incertitude de mesure dans au moins la première dimension (32) des premières coordonnées spatiales (56) ; et
- déterminer si les deuxièmes coordonnées spatiales (60) d'un point de mesure auxiliaire respectif (54) se situent à l'intérieur de la première plage du point de mesure d'évaluation déterminé respectif (70).

3. Procédé selon la revendication 2, **caractérisé en ce que** les deuxièmes coordonnées spatiales (60) d'au moins un point de mesure auxiliaire (54) se situent à l'intérieur de la plage, et dans lequel les premières coordonnées spatiales (56) d'un point de mesure d'évaluation respectif ne sont pas remplacées lorsqu'il a été déterminé que les deuxièmes coordonnées spatiales (60) d'un point de mesure auxiliaire respectif (54) ne se situent pas à l'intérieur de la première plage du point de mesure d'évaluation déterminé respectif (70).

4. Procédé selon l'une quelconque des revendications 1 à 3, **caractérisé en ce que** le premier capteur est une caméra qui acquiert une image bidimensionnelle de l'objet de mesure (12) à laquelle est associée au moins une valeur de profondeur ayant pour base une position de mise au point.

5. Procédé selon la revendication 4, **caractérisé en ce que**, lors de l'étape de détermination d'une relation pour des points de mesure d'évaluation (52), des zones (68) de l'image bidimensionnelle dont l'image est formée de manière nette, il est établi que celles-ci présentent les mêmes valeurs de profondeur.

6. Procédé selon l'une quelconque des revendications 1 à 3, **caractérisé en ce que** le premier capteur détecte une géométrie (74) de la surface ou du volume, dans lequel la relation est déterminée à partir de ladite géométrie (74).

7. Procédé selon la revendication 6, **caractérisé en ce que** le deuxième ensemble de données de mesure de coordonnées (62) représente au moins deux points de mesure auxiliaires (54), de manière à ce que le premier ensemble de données de mesure de coordonnées représente un nombre correspondant de points de mesure d'évaluation déterminés (70), et dans lequel l'étape de correction (50) des premières coordonnées spatiales (56) de l'au moins un autre point de mesure d'évaluation (70) au moins dans la première dimension (32) est effectuée sur la base de la géométrie (74) et au moyen d'une interpolation entre les points de mesure d'évaluation déterminés (70).

8. Procédé selon la revendication 6, **caractérisé en ce que**, lors de l'étape de correction (50) des premières coordonnées spatiales (56) de l'au moins un autre point de mesure d'évaluation (70) dans au moins la première dimension (32), la géométrie (74) est adaptée aux points de mesure auxiliaires (54).

9. Procédé selon la revendication 8, **caractérisé en ce qu'**une étape de fourniture d'une première plage représentant une incertitude de mesure est effectuée pour chaque point de mesure d'évaluation, dans lequel la première plage représente l'incertitude de mesure dans au moins la première dimension (32) des premières coordonnées spatiales (56) ; et dans lequel l'adaptation s'effectue au moyen d'un processus d'optimisation, dans lequel, pour l'au moins un autre point de mesure d'évaluation (70), la première plage est utilisée en tant que plage d'optimisation.

10. Procédé selon la revendication 8 ou 9, **caractérisé en ce qu'**une étape de fourniture d'une deuxième plage représentant une incertitude de mesure est effectuée pour chaque point de mesure auxiliaire (54), dans lequel la deuxième plage représente l'incertitude de mesure dans au moins la première dimension (32) des deuxièmes coordonnées spatiales (60), dans lequel l'adaptation s'effectue au moyen d'un processus d'optimisation et dans lequel la deuxième plage est utilisée en tant que plage d'optimisation.

11. Procédé selon l'une quelconque des revendications 1 à 10, **caractérisé en ce qu'**une étape de fourniture d'une première plage représentant une incertitude de mesure est effectuée pour chaque point de mesure d'évaluation, dans lequel la première plage représente l'incertitude de mesure dans au moins la première dimension (32) des premières coordonnées spatiales (56) ; et **en ce qu'**une étape de fourniture d'une deuxième plage représentant une incertitude de mesure est effectuée pour chaque point de mesure auxiliaire (54), dans lequel la deuxième plage représente l'incertitude de mesure dans au moins la première dimension (32) des deuxièmes coordonnées spatiales (60), et dans lequel le premier capteur est le deuxième capteur sont sélectionnés de manière à ce que la deuxième plage, dans au moins la première dimension (32), soit inférieure à la première plage.

12. Procédé selon l'une quelconque des revendications 1 à 11, **caractérisé en ce que** les étapes de remplacement (46), de détermination (48) et de correction (50) sont effectuées dans au moins une première dimension (32) des coordonnées spatiales (56, 60), et **en ce que** les étapes de remplacement (46), de détermination (48) et de correction (50) sont effectuées dans au moins une deuxième dimension (22, 23), dans lequel, dans la deuxième dimension (22, 23), le premier ensemble de données de mesure de coordonnées (58) représente des premières coordonnées spatiales (56), détectées par le deuxième capteur (18), de plusieurs points de mesure d'évaluation (52) de la zone d'évaluation (53), et dans lequel, dans la deuxième dimension (22, 23), le deuxième ensemble de données de mesure de coordonnées représente des deuxièmes coordonnées spatiales (60), détectées par le premier capteur (16), d'au moins un point de mesure auxiliaire (54) à l'intérieur de la zone évaluation (53).

13. Procédé selon l'une quelconque des revendications 1 à 11, **caractérisé en ce que** les étapes de remplacement (46) et de correction (50) ne sont effectuées que dans la première dimension (32) des coordonnées spatiales (56, 60).

14. Procédé (100) pour la détermination de données de mesure de coordonnées d'un objet de mesure (12), comportant les étapes consistant à :
- détecter (102) un premier ensemble de données de mesure de coordonnées (58) au moyen d'un premier capteur (16) ;
- détecter (104) un deuxième ensemble de données de mesure de coordonnées (62) au moyen d'un deuxième capteur (18) ;
- effectuer une évaluation au moyen d'un procédé (10) selon l'une quelconque des revendications 1 à 13 ; et
- fournir en sortie (106) les données de mesure de coordonnées, notamment le premier ensemble de données de mesure de coordonnées (58) évalué.

15. Dispositif (10), notamment appareil de mesure de coordonnées ou machine-outil, destiné à mesurer un objet de mesure (12), comportant un premier capteur (16) destiné à détecter un premier ensemble de données de mesure de coordonnées (58), un deuxième capteur (18) destiné à détecter un deuxième ensemble de données de mesure de coordonnées (62) et un dispositif d'évaluation (19) destiné à évaluer le premier ensemble de données de mesure de coordonnées (58) et le deuxième ensemble de données de mesure de coordonnées (62) conformément à un procédé (10 ; 100) selon l'une quelconque des revendications 1 à 14, comportant notamment en outre un dispositif de sortie (36) destiné à fournir en sortie le premier ensemble de données de mesure de coordonnées (58) évalué.

16. Produit de programme d'ordinateur (38) comportant un code de programme destiné à mettre en oeuvre l'un des procédés selon l'une quelconque des revendications 1 à 13 lorsque le programme d'ordinateur est exécuté sur un dispositif de traitement de données, notamment sur un dispositif d'évaluation (19) d'un appareil de mesure de coordonnées ou d'une machine-outil.
